# EUROPEAN PATENT APPLICATION

(11) **EP 4 672 390 A1**
(43) Date of publication of application: **31.12.2025**
(21) Application number: 24223882.2
(22) Date of filing: 31.12.2024
(51) Int. Cl.: H01M 10/04, H01M 50/109, H01M 50/184, H01M 50/188

(54) **BUTTON BATTERY, METHOD OF MANUFACTURING GASKET, AND METHOD OF ASSEMBLING BUTTON BATTERY**

(30) Priority: 25.06.2024 CN 202410832392; 25.06.2024 CN 202410832430; 25.06.2024 CN 202421470638 U; 25.06.2024 CN 202421470730 U; 30.09.2024 WO PCT/CN2024/123024
(71) Applicant: Eve Energy Co., Ltd., Huizhou, Guangdong 516006 (CN)
(72) Inventor: ZHANG, Hong, Huizhou, Guangdong, 516006 (CN); ZHANG, Lixing, Huizhou, Guangdong, 516006 (CN); SUN, Peiling, Huizhou, Guangdong, 516006 (CN); CAO, Lang, Huizhou, Guangdong, 516006 (CN)
(74) Representative: Berggren Oy

(57) **Abstract**

A button battery (1), a method of manufacturing a gasket (20), and a method of assembling the button battery (1) are provided by the present disclosure. The button battery (1) includes a positive electrode cap assembly (220), a positive electrode current collector (14), and a positive plate (15). The positive electrode cap assembly (220) includes a positive electrode cap (11) and a gasket (20). The gasket (20) includes a gasket part (21) and an elastic plate part (22) intersected with each other. At least one of the elastic plate part (22) and the gasket part (21) is provided with a protruding structure (23). The protruding structure (23) passes through the through hole (142) and is fixed to the positive plate (15).

## Description

### TECHNICAL FIELD

The present disclosure relates to a field of battery technologies, and in particular, to a button battery, a method of manufacturing a gasket, and a method of assembling the button battery.

### BACKGROUND

As an energy source, a stable power supply is a basic requirement for button batteries. High internal resistance of the button batteries may lead to reduced battery life, decreased capacity, increased self-discharge rate, reduced voltage, and battery heating. Therefore, the internal resistance of the button batteries is generally used as one of important indicators to evaluate reliability and stability of the button batteries. That is, an initial internal resistance of the button batteries is required to be less than 10 Ω, and the internal resistance should be less than 20 Ω after being stored for one week at 85 °C. With the development of society and changes in market, application environments for the button batteries have become increasingly harsh. For example, the button batteries are required to supply stable power under high temperature, high humidity, high voltage, high-frequency vibration, and high-speed centrifugation conditions. That is, the internal resistance of the button batteries is less than 15 Ω after being stored for 100 hours at 125 °C.

### SUMMARY

As the storage temperature for the button batteries increases from 85 °C to 125 °C, a bulging degree of a positive electrode cap is increased due to a structure of a positive electrode current collector and an assembly process between the positive electrode current collector and the positive electrode cap in related art. A gap between the positive electrode current collector and the positive electrode cap is increased, resulting in poor contact therebetween and a decrease in a current collection efficiency of the positive electrode current collector. The batteries are unable to provide stable power, thereby failing to meet requirements of current application scenarios for the button batteries.

In a first aspect, a button battery is provided by the present disclosure. The button battery includes a positive electrode cap assembly, a positive electrode current collector, and a positive plate. The positive electrode cap assembly includes a positive electrode cap and a gasket mounted inside the positive electrode cap. The positive electrode current collector is disposed inside the positive electrode cap and provided with an accommodation cavity. A bottom wall of the positive electrode current collector is provided with a through hole. The positive plate is disposed inside the accommodation cavity. The gasket includes a gasket part and an elastic plate part intersected with each other. A length of the gasket part is provided as L1, and a length of the elastic plate part is provided as L2, where L1>L2. At least one of the elastic plate part and the gasket part is provided with a protruding structure. The protruding structure passes through the through hole and is fixed to the positive plate.

In a second aspect, a method of manufacturing a gasket of the button battery mentioned above is provided by the present disclosure. The method includes: forming an elastic plate combination having a plurality of elastic plate parts connected in the shape of a band by a stamping process; forming a gasket combination having a plurality of gasket parts connected in the shape of a band by a stamping process; and adjusting a center point of the elastic plate combination and a center point the gasket combination to be coincided, and welding the elastic plate combination and the gasket combination together by using a laser welding apparatus to form a gasket assembly having a plurality of gaskets connected with each other.

In a third aspect, a method of assembling the button battery mentioned above is provided by the present disclosure. The method includes: adjusting a relative position between the gasket and the positive electrode cap, and welding the gasket and the positive electrode cap together to form a positive electrode cap assembly; placing the positive plate into the positive electrode current collector to form a positive electrode assembly; placing a negative plate into a negative electrode cap to form a negative electrode assembly; sequentially placing a separator and the positive electrode assembly into the negative electrode assembly to form an assembly; injecting an electrolyte into the assembly; and covering the positive electrode cap assembly on an end of the assembly.

### BRIEF DESCRIPTION OF THE DRAWINGS

FIG. 1 is a cross-sectional structural view at one angle of a button battery according to some embodiments of the present disclosure.
FIG. 2 is a cross-sectional structural view at another angle of the button battery according to some embodiments of the present disclosure.
FIG. 3 is a cross-sectional structural view at one angle of the button battery according to other embodiments of the present disclosure.
FIG. 4 is a three-dimensional view of a gasket according to some embodiments of the present disclosure.
FIG. 5a is a view of a material band for a gasket assembly according to some embodiments of the present disclosure.
FIG. 5b is a view of a material band for a gasket assembly according to other embodiments of the present disclosure.
FIG. 6 is a cross-sectional structural view at one angle of an elastic plate according to some embodiments of the present disclosure.
FIG. 7a is a partial enlarged view of FIG. 6 according to some embodiments of the present disclosure.
FIG. 7b is a partial enlarged view of FIG. 6 according to other embodiments of the present disclosure.
FIG. 8 is a cross-sectional structural view at another angle of the gasket according to some embodiments of the present disclosure.
FIG. 9a is a first three-dimensional view of the gasket according to some embodiments of the present disclosure.
FIG. 9b is a second three-dimensional view of the gasket according to some embodiments of the present disclosure.
FIG. 9c is a third three-dimensional view of the gasket according to some embodiments of the present disclosure.
FIG. 9d is a fourth three-dimensional view of the gasket according to some embodiments of the present disclosure.
FIG. 10 is a three-dimensional view of the gasket according to some embodiments of the present disclosure and a positive electrode cap welded together.
FIG. 11 is a cross-sectional view of the gasket according to some embodiments of the present disclosure and the positive electrode cap welded together.
FIG. 12 is a front view of the gasket and the positive electrode cap welded together according to some embodiments of the present disclosure.
FIG. 13 is a view showing positions of welding points between the gasket according to some embodiments of the present disclosure and the positive electrode cap.
FIG. 14 is a schematic view at one angle showing positions of the gasket according to some embodiments of the present disclosure and a positive electrode current collector.
FIG. 15a is a schematic view of construction lines of the gasket according to some embodiments of the present disclosure.
FIG. 15b is a schematic view of the construction lines of the gasket provided by other embodiments of the present disclosure.
FIG. 16 is a schematic position view at another angle of the gasket according to some embodiments of the present disclosure and the positive electrode current collector.
FIG. 17 is a cross-sectional view of the gasket according to some embodiments of the present disclosure and the positive electrode current collector.
FIG. 18a is a view showing positions of the gasket according to some comparative examples of the present disclosure and the positive electrode current collector.
FIG. 18b is a view showing positions of the gasket according to other comparative examples of the present disclosure and the positive electrode current collector.
FIG. 19 is a schematic dimensional view of the gasket according to some embodiments of the present disclosure.
FIG. 20a is a cross-sectional view of the gasket according to Embodiment 1 of the present disclosure.
FIG. 20b is a cross-sectional view of the gasket according to Comparative Example 1 of the present disclosure.
FIG. 20c is a cross-sectional view of the gasket according to Comparative Example 2 of the present disclosure.
FIG. 21 is a cross-sectional view at one angle of the button battery according to some embodiments of the present disclosure.
FIG. 22 is a cross-sectional view at another angle of the button battery according to some embodiments of the present disclosure.
FIG. 23 is a cross-sectional view at one angle of the button battery according to other embodiments of the present disclosure.
FIG. 24 is a cross-sectional view at another angle of the button battery according to the other embodiments of the present disclosure.
FIG. 25 is a three-dimensional view of the gasket according to some embodiments of the present disclosure.
FIG. 26a is a three-dimensional view at one angle of a gasket part according to some embodiments of the present disclosure.
FIG. 26b is a three-dimensional view at another angle of the gasket part according to some embodiments of the present disclosure.
FIG. 26c is a three-dimensional view at yet another angle of the gasket part according to some embodiments of the present disclosure.
FIG. 27a is a three-dimensional view at one angle of an elastic plate part according to some embodiments of the present disclosure.
FIG. 27b is a three-dimensional view at another angle of the elastic plate part according to some embodiments of the present disclosure.
FIG. 27c is a three-dimensional view at yet another angle of the elastic plate part according to some embodiments of the present disclosure.
FIG. 27d is a three-dimensional view of the elastic plate part according to other embodiments of the present disclosure.
FIG. 28 is a schematic view of a welding region between the elastic plate part and the gasket part according to some embodiments of the present disclosure.
FIG. 29a is a partial enlarged view of a first structure in FIG. 27c.
FIG. 29b is a partial enlarged view of a second structure in FIG. 27c.
FIG. 29c is a partial enlarged view of a third structure in FIG. 27c.
FIG. 30 is a partial cross-sectional view of the button battery according to some embodiments of the present disclosure.
FIG. 30a is a partial cross-sectional view of the button battery according to some comparative examples of the present disclosure.
FIG. 30b is a partial cross-sectional view of the button battery according to other comparative examples of the present disclosure.
FIG. 31 is a schematic view of a welding region between the gasket according to some embodiments of the present disclosure and the positive electrode cap.
FIG. 32a is a three-dimensional view of the gasket part according to other embodiments of the present disclosure.
FIG. 32b is a three-dimensional view of the gasket part according to further other embodiments of the present disclosure.
FIG. 33 is a cross-sectional view according to some embodiments of the present disclosure of the gasket and the positive electrode cap welded together.
FIG. 34 is a three-dimensional view of the gasket according to some embodiments of the present disclosure and the positive electrode cap welded together.
FIG. 35 is a positional view of second welding points between the gasket according to some embodiments of the present disclosure and the positive electrode cap.
FIG. 36a is a cross-sectional view at one angle of the button battery according to some embodiments of the present disclosure with the positive electrode cap bulging outward.
FIG. 36b is a cross-sectional view at another angle of the button battery according to some embodiments of the present disclosure with the positive electrode cap bulging outward.
FIG. 37 is a schematic structural view 1 of a position between the gasket according to some embodiments of the present disclosure and the positive electrode current collector.
FIG. 38 is a schematic structural view 2 of the position between the gasket according to some embodiments of the present disclosure and the positive electrode current collector.
FIG. 39 is a schematic structural view 3 of the position between the gasket according to some embodiments of the present disclosure and the positive electrode current collector.
FIG. 40 is a schematic structural view 4 of the position between the gasket according to some embodiments of the present disclosure and the positive electrode current collector.
FIG. 41 is a schematic view of the construction lines of the gasket according to some embodiments of the present disclosure.
FIG. 42a is a schematic structural view 5 of the position according to some embodiments of the present disclosure between the gasket and the positive electrode current collector
FIG. 42b is a schematic structural view of the position between the gasket according to some comparative examples of the present disclosure and the positive electrode current collector
FIG. 42c is a schematic structural view of the position between the gasket according to other comparative examples of the present disclosure and the positive electrode current collector
FIG. 43a is a schematic view of a raw material structure of a gasket combination according to some embodiments of the present disclosure.
FIG. 43b is a schematic view of a raw material structure of an elastic plate combination according to some embodiments of the present disclosure.
FIG. 43c is a schematic view of a raw material structure of a gasket assembly according to some embodiments of the present disclosure.
FIG. 44a is a schematic partial structural view of the elastic plate part according to Embodiment 1 of the present disclosure.
FIG. 44b is a schematic partial structural view of the elastic plate part according to Comparative Example 1 of the present disclosure.
FIG. 44c is a schematic partial structural view of the elastic plate part according to Comparative Example 2 of the present disclosure.

### DETAILED DESCRIPTION

### Embodiment 1

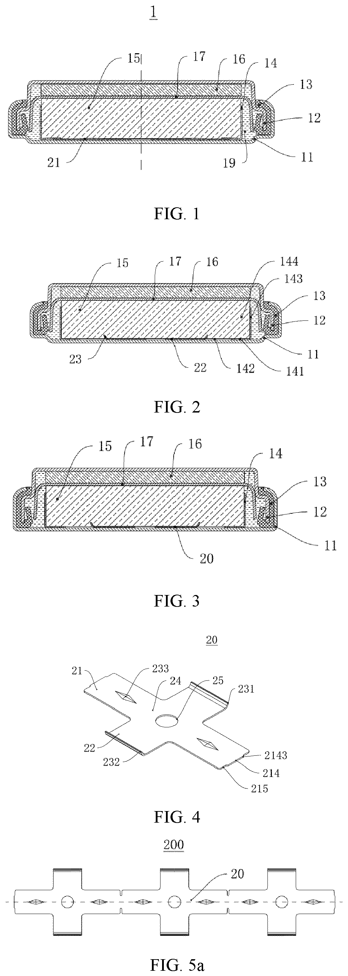

Referring to FIG. 1 to FIG. 3, a button battery 1 is provided by the present disclosure. The button battery 1 includes a positive electrode cap 11, a negative electrode cap 12, a sealing ring 13, a positive electrode current collector 14, a positive plate 15, a negative plate 16, a separator 17, and an electrolyte 19.The positive electrode cap 11 is provided as an open cap-shaped structure. As shown in FIG. 3, an outer side surface of the positive electrode cap 11 may be constructed as an upright surface. As shown in FIG. 1, the outer side surface of the positive electrode cap 11 may be provided with a boss structure 111. The negative electrode cap 12 is provided as an open cap-shaped structure. Both an inner diameter and an outer diameter of the positive electrode cap 11 are greater than an inner diameter and an outer diameter of the negative electrode cap 12, so that the positive electrode cap 11 can be capped over outside of the negative electrode cap 12. The sealing ring 13 is disposed on a connection position between the positive electrode cap 11 and the negative electrode cap 12. The sealing ring 13 forms a wrapping structure for at least a part of an outer side wall of the negative electrode cap 12, so that a sealing connection structure is formed between the positive electrode cap 11 and the negative electrode cap 12. Moreover, the sealing ring 13 is further used to provide insulation between the positive electrode cap 11 and the negative electrode cap 12.

The positive electrode current collector 14 is accommodated in an inner cavity of the positive electrode cap 11. The positive electrode current collector 14 may be any one of a current collecting ring, a current collecting mesh, and a current collecting sheet. As shown in FIG. 1, the positive electrode current collector 14 is provided as a current collecting ring. The positive electrode current collector 14 includes an annular bottom wall 141 and a side wall 143 circumferentially connected onto the annular bottom wall 141. The annular bottom wall 141 and the side wall 143 enclose an accommodation cavity 144. The annular bottom wall 141 is provided with a through hole 142. An inner diameter of the positive electrode current collector 14 is less than the inner diameter of the negative electrode cap 12. The positive plate 15 is accommodated inside the accommodation cavity 144 of the positive electrode current collector 14 and is in contact with the positive electrode cap 11 through the through hole 142. The negative plate 16 is accommodated inside the inner cavity of the negative electrode cap 12. The separator 17 is disposed between the positive plate 15 and the negative plate 16 for separating the positive plate 15 and the negative plate 16. A projection surface of the negative plate 16 on the separator 17 substantially coincides with a projection surface of the positive plate 15 on the separator 17. The electrolyte 19 is filled inside the entire button battery 1. After the electrolyte 19 is injected, internal structures such as the negative plate 16 and the positive plate 15 are in a state of being immersed in the electrolyte 19, and charged ions in the positive plate 15 and the negative plate 16 are electrically communicated through the electrolyte 19.

Continuing to refer to FIG. 1 to FIG. 3, the button battery 1 further includes a gasket 20. The gasket 20 is connected to an inner surface of the positive electrode cap 11. The gasket 20 includes a gasket part 21 and an elastic plate part 22 intersected with each other. A length L1 of the gasket part 21 is greater than a length L2 of the elastic plate part 22. Two ends of the gasket part 21 are connected to the positive electrode current collector 14. The elastic plate part 22 is located inside the positive electrode current collector 14. At least one of the elastic plate part 22 and the gasket part 21 is provided with a protruding structure 23 used for fixing the positive plate 15. The gasket 20 is added into the button battery 1. The gasket 20 is connected to the positive electrode cap 11. The length L1 of the gasket part 21 of the gasket 20 is greater than the length L2 of the elastic plate part 22. The two ends of the gasket part 21 are connected to the positive electrode current collector 14. The elastic plate part 22 is located inside the positive electrode current collector 14. At least one of the elastic plate part 22 and the gasket part 21 is further provided with the protruding structure 23 used for further fixing the positive plate 15. The gasket 20 is configured to be respectively connected to the positive electrode cap 11 and the positive electrode current collector 14. The protruding structure 23 on the gasket 20 is used for further fixing the positive plate 15. Thus the positive electrode cap 11 remains in contact with the positive electrode cap 11 and the positive electrode current collector 14 when the positive electrode cap 11 bulges, thereby improving the stability of the internal structures of the battery.

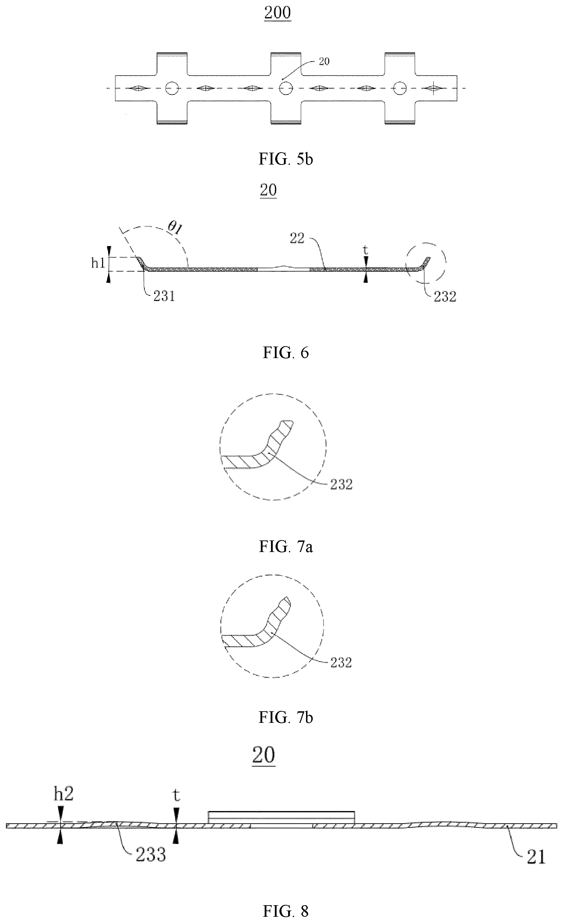

Continuing to refer to FIG. 4 and FIG. 6, the gasket part 21 and the elastic plate part 22 of the gasket 20 and the protruding structure 23 are integrally formed. A thickness of the gasket 20 is provided as t, where 0.05 mm≤t≤030 mm. A material of the gasket 20 may be any one of SUS44, SUS304, SUS430, SUS316, and SUS444. In some specific embodiments, the gasket 20 is made of the SUS430, so that the gasket 20 itself is magnetic. This is conducive to reducing the welding difficulty between the gasket 20 and the positive electrode cap 11 or the positive electrode current collector 14, thereby improving the feasibility of welding. The thickness t of the gasket 20 ranges from 0.05 mm to 0.30 mm. In some embodiments, the thickness t of the gasket 20 ranges from 0.10 mm to 0.20 mm. In some specific embodiments, the thickness t of the gasket 20 may be 0.05 mm, 0.10 mm, 0.15 mm, 0.20 mm, 0.25 mm, 0.30 mm, a value between any two of the above-mentioned values, or a range between any two of the above-mentioned values. Through research, Inventors have found that when the thickness t of the gasket 20 is less than 0.05 mm, a strength of the gasket 20 is low and the gasket 20 deforms easily, so that an elastic connection function of the gasket 20 cannot be exerted. When the thickness t of the gasket 20 is greater than 0.30 mm, a volume of the gasket 20 increases and occupies internal space of the battery, resulting in a decrease in a capacity of the battery.

As shown in FIG. 5a and FIG. 5b, a method of manufacturing a gasket is provided by the present disclosure. The gasket is processed and molded by a stamping forming process. During a stamping process, a gasket assembly 200 is formed by a plurality of gaskets 20 rolled with connecting material edges in form of a roll. Continuing to refer to FIG. 5a, the plurality of gaskets 20 are connected by the connecting material edges. Adjacent two of the gaskets 20 are cut to form two single gaskets 20, and a side edge of each of the two single gaskets 20 is still provided with a protruding end structure. Continuing to refer to FIG. 5b, the plurality of gaskets 20 are directly connected. Adjacent two of the gaskets 20 are cut to form the two single gaskets 20 with the side edges thereof being flush.

Continuing to refer to FIG. 4, the protruding structure 23 disposed on the gasket 20 and used for fixing the positive plate 15 includes a first flange 231 and a second flange 232. The first flange 231 and the second flange 232 are located at two ends of the elastic plate part 22, respectively. In the present disclosure, the first flange 231 and the second flange 232 are disposed at the two ends of the elastic plate part 22, respectively. The first flange 231 and the second flange 232 can be embedded in the positive plate 15. Compared the protruding structure 23 disposed at other positions of the elastic plate part 22, the protruding structure 23 disposed at the two ends of the elastic plate part 22 can bring an larged contact area between the gasket 20 and the positive plate 15, thereby improving a limiting effect between the protruding structure 23 and the positive plate 15. In particular, when the button battery 1 is subjected to extreme vibration and centrifugation conditions, the position movement of the positive electrode current collector 14 and the gasket 20 inside the battery can be reduced by the first flange 231 and the second flange 232. Mutual impact forces among the positive plate 15, and the negative plate 16 of the battery and the electrolyte are reduced, thereby further reducing the internal resistance of the battery and improving the stability of battery performance.

As shown in FIG. 6, a height of the first flange 231 or the second flange 232 in a thickness direction of the button battery 1 is provided as h1, where 2*t≤h1≤10*t. An included angle defined by an extension line of an outer tangent plane of the first flange 231 or the second flange 232 and a plane where the elastic plate part 22 is located ranges from 90° to 150°. In some embodiments, the first flange 231 and the second flange 232 are arranged symmetrically about a center of the gasket 20. A height of the first flange 231 protruding with respect to a base surface 24 of the elastic plate part 22 is the same as a height of the second flange 232 protruding with respect to a base surface 24 of the elastic plate part 22, and both are set as h1. In some embodiments, the h1 may be 2*t, 3*t, 4*t, 5*t, 6*t, 7*t, 8*t, 9*t, 10*t, a value between any two of the above-mentioned values, or a range between any two of the above-mentioned values. Through research, the Inventors have found that when the height h1 of the first flange 231 or the second flange 232 satisfies: 2*t≤h1≤10*t, after the first flange 231 and the second flange 232 are embedded in the positive plate 15, an overall structure of the positive plate 15 will not be damaged by the first flange 231 or the second flange 232, resulting in chip decay or powder loss. Moreover, the first flange 231 and the second flange 232 do not deforms during a process of being embedded in the positive plate 15. Specifically, when the height h1 of the first flange 231 or the second flange 232 is less than 2*t, since a depth of the first flange 231 or the second flange 232 being embedded in the positive plate 15 is not large enough, the first flange 231 or the second flange 232 is prone to be separated from the positive plate 15 when the positive electrode cap 11 bulges outward, resulting in poor contact between the gasket 20 as a whole and the positive electrode current collector 14. When the height h1 of the first flange 231 or the second flange 232 is greater than 10*t, the first flange 231 and the second flange 232 need to be embedded in the positive plate 15 at a relatively large depth. During the process of the first flange 231 and the second flange 232 being embedded in the positive plate 15, the gasket 20 is prone to deform and the overall structure of the positive plate 15 is prone to be damaged.

Continuing to refer to FIG. 6, the included angle defined by the extension line of the outer tangent plane of the first flange 231 or the second flange 232 and the plane where the elastic plate part 22 is located is provided as θ1, where 90°≤θ1≤150°. In some specific embodiments, the first flange 231 or the second flange 232 are arranged symmetrically about the center of the gasket 20. The included angle defined by the extension line of the outer tangent plane of the first flange 231 and the plane where the elastic plate part 22 is located is the same as the included angle defined by the extension line of the outer tangent plane of the second flange 232 and the plane where the elastic plate part 22 is located, and both are set to θ1. The θ1 needs to satisfy: 90°≤θ1≤150°. For example, the θ1 may be 90°, 100°, 110°, 120°, 130°, 140°, 150°, an angle between any two of the above-mentioned angles, or a range between any two of the above-mentioned angles. Through research, the Inventors have found that when the θ1 is less than 90 °, the first flange 231 or the second flange 232 are difficult to be embedded in the positive plate 15. When the θ1 is greater than 150°, a range of the first flange 231 or the second flange 232 being embedded in the positive plate 15 is too large, and the overall structure of the positive plate 15 is prone to be damaged, resulting in powder loss falling off of the positive plate 15. The first flange 231 or the second flange 232 may be provided as a straight-edged inclined structure. As shown in FIG. 7a, the first flange 231 or the second flange 232 may also be provided in a wave-shaped inclined structure. As shown in FIG. 7b, the first flange 231 or the second flange 232 may also be provided as an inclined structure having a sharp angle structure at an end part.

Continuing to refer to FIG. 4 and FIG. 8, the protruding structure 23 includes at least two protrusions 233 arranged on the gasket part 21. The at least two protrusions 233 are symmetrically arranged at two sides of the elastic plate part 22. In the present disclosure, the at least two protrusions 233 are arranged on the gasket part 21 and are further embedded in the positive plate 15, so that the contact area between the gasket 20 and the positive plate 15 is increased, thereby increasing the limiting effect of the protruding structure 23 on the positive plate 15. When the button battery 1 is in the extreme vibration or centrifugation conditions, the protruding structure 23 mentioned-above can effectively prevent the positive electrode current collector 14 and the gasket 20 from being relatively displaced inside the button battery 1, so that the mutual impact forces among the positive plate 15, and the negative plate 16 and the electrolyte 19 are reduced, thereby further reducing the internal resistance of the button battery 1 and improving the stability of electrical performance of the button battery 1. Two protrusions 233 are arranged on the gasket part 21. The two protrusions 233 are symmetrically arranged with respect to the elastic plate part 22. The first flange 231 and the second flange 232 are arranged at the two ends of the elastic plate part 22, respectively. The first flange 231 and the second flange 232 are symmetrically arranged with respect to the gasket part 21. Since the gasket part 21 and the elastic plate part 22 are intersected with each other, the two protrusions 233 can be configured to provide a fixing force in a first direction to the positive plate 15. The first flange 231 and the second flange 232 can be configured to provide a fixing force in a second direction to the positive plate 15. As such, the positive plate 15 is simultaneously subjected to the fixing force in the first direction and the fixed force in the second direction provided by the gasket 20, so that the gasket 20 can sufficiently limit the displacement of the positive plate 15 relative to the gasket 20 in extreme environments.

As shown in FIG. 8, a height of each of the at least two protrusions 233 along a thickness direction of the button battery 1 is provided as h2, where 1.5*t≤h2≤3*t. In some specific embodiments, the height h2 of each of the two projections 233 protruding with respect to the plane where the gasket part 21 is located may be 1.5*t, 2.0*t, 2.5*t, 3.0*t, a value between any two of the above-mentioned values, or a range between any two of the above-mentioned values. Through research, the Inventors have found that when the height h2 of each of the protrusions 233 is less than 1.5*t, since a depth of the two protrusions 233 embedded in the positive plate 15 is not large enough, the two protrusions 233 are prone to be separated from the positive plate 15 when the positive electrode cap 11 bulges outward, resulting in poor contact between the gasket 20 as a whole and the positive electrode current collector 14. When the height h2 of each of the two protrusions 233 is greater than 3*t, the two protrusions 233 need to be embedded in the positive plate 15 at a relatively large depth. This causes that the process of embedding the two protrusions 233 is difficult, and the overall structure of the positive plate 15 is prone to be damaged, resulting in powder dropping. An overall shape of each of the two protrusions 233 may be a triangular triangular pyramidal or a polyprismatic structure having a sharp angle structure.

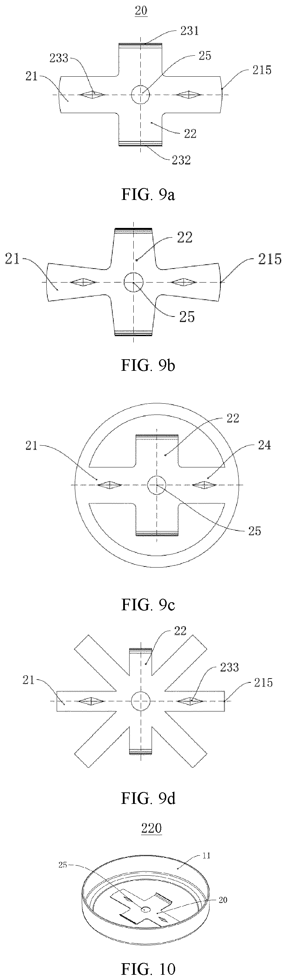

Continuing to refer to FIG. 4 and FIG. 9a to FIG. 9d, an orthographic projection of the gasket 20 on the positive electrode cap 11 is in the shape of a cross, of a " 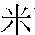 ", or of a combination of a circle and a cross. The base surface 24 of the gasket 20 may be a cross-shaped structure. The gasket part 21 and the elastic plate part 22 are intersected with each other to form an intersection part. The gasket part 21 includes a first part of the gasket part 21 and a second part of the gasket part 21 symmetrically arranged with respect to the intersection part. The elastic plate part 22 includes a first part of the elastic plate part 22 and a second part of the elastic plate part 22 symmetrically arranged with respect to the intersection part. In some specific embodiments, as shown in FIG. 4, the base surface 24 of the gasket 20 may be provided as a cross-shaped structure. Each of the two parts of the gasket part 21 and each of the two parts of the elastic plate part 22 are provided as a regular rectangular structure, respectively. In other alternative embodiments, the base surface 24 of the gasket 20 may be provided as an irregular cross-shaped structure. As shown in FIG. 9a, both side edges of the two parts of the gasket part 21 are provided as an arc-shaped structure, respectively. As shown in FIG. 9b, the base surface 24 of the gasket part 21 is provided as the irregular cross-shaped structure. Specifically, the two parts of the gasket part 21 are provided as a fan-shaped structure, and the two parts of the elastic plate part 22 are also provided as a fan-shaped structure. As shown in FIG. 9c, the base surface 24 of the gasket 20 includes an outer ring part and an inner joint part. The outer ring part is constructed as a closed circular ring structure. The inner joint part is constructed as a cross-shaped structure. The two ends of the gasket part 21 are connected on an annular edge. Continuing to refer to FIG. 9d, the base surface 24 of the gasket 20 is provided as the " 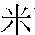 " -shaped structure or other polygonal structure. An outer periphery of the base surface 24 connected to the intersection part is provided with a plurality of extension parts, that is, a third extension part, a fourth extension part, or a fifth extension part between the gasket part 21 and the elastic plate part 22. Among them, the length L1 of the gasket part 21 is greater than the length L2 of the elastic plate part 22, a length of the third extension part, and a length of the fourth extension part, respectively.

Continuing to refer to FIG. 10 to FIG. 12, the gasket 20 is provided with a positioning hole 25 configured for providing positioning when welding the gasket 20 to the positive electrode cap 11. The gasket 20 is welded to the inner surface of the positive electrode cap 11. A concentricity between the gasket 20 and the positive electrode cap 11 is less than or equal to 0.3 mm. The gasket 20 is connected to the inner surface of the positive electrode cap 11 by welding. The center of the gasket 20 is provided with the positioning hole 25. An intersection region between the gasket part 21 and the elastic plate part 22 is located at the center of the gasket 20. The positioning hole 25 is located at a center of the intersection region between the gasket part 21 and the elastic plate part 22. The gasket assembly 200 in form of a roll shown in FIG. 5a and FIG. 5b is transferred into a laser welding equipment and is cut into a plurality of single gaskets 20. At the same time, the positive electrode cap 11 is placed in a fixture by using a vibrating disc feeding method. During a process of welding the gasket 20 and the positive electrode cap 11, the gasket 20 is placed on the inner surface of the positive electrode cap 11 by clamping the positioning hole 25 using the fixture. The gasket 20 and the positive electrode cap 11 are centrally positioned through the positioning hole 25. The gasket 20 and the positive electrode cap 11 are welded together by laser welding. During an assembling process, the concentricity between the gasket 20 and the positive electrode cap 11 needs to be controlled to be less than or equal to 0.3 mm. In some embodiments, the concentricity between the gasket 20 and the positive electrode cap 11 is less than or equal to 0.1 mm. Through research, the Inventors have found that if the concentricity between the positive electrode cap 11 and the gasket 20 is greater than 0.3 mm, deviation between the gasket 20 and the positive electrode cap 11 will be serious, and thereby deviation between the gasket 20 and the positive electrode current collector 14 will be serious, thereby reducing a current collecting effect of the positive electrode current collector 14, and further affecting the electrical performance of the button battery 1.

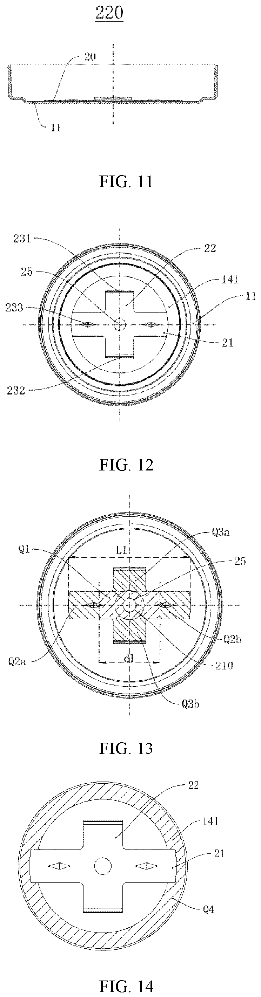

As shown in FIG. 13, at least two first welding points 210 are provided between the gasket 20 and the positive electrode cap 11. At least two of the first welding points 210 are symmetrically arranged with respect to a center point of the gasket 20. Through research, the Inventors have found that during the process of welding the gasket 20 and the positive electrode cap 11, a number of the first welding points 210 formed by welding the gasket 20 and the positive electrode cap 11 is two. Two first welding points 210 contribute to improving a welding strength between the gasket 20 and the positive electrode cap 11. If the number of the first welding points 210 formed between the gasket 20 and the positive electrode cap 11 by welding is one, the gasket 20 is prone to be deviated and warped with respect to the positive electrode cap 11. If the number of the first welding points 210 formed between the gasket 20 and the positive electrode cap 11 by welding is more than two, the welding process between the gasket 20 and the positive electrode cap 11 is complicated, and the welding cost is further increased.

Continuing to refer to FIG. 13, a position of a welding region between the gasket 20 and the positive electrode cap 11 is optimized to further improve the stability performance of the button battery 1. The base surface 24 of the gasket 20 configured to be welded is divided into five regions, i.e., a first region Q1, a first part of a second region Q2a, a second part of the second region Q2b, a first part of a third region Q3a, and a second part of the third region Q3b. The first region Q1 is located at the intersection region between the gasket part 21 and the elastic plate part 22. The first part of the second region Q2a and the second part of the second region Q2b are arranged at two sides of the first region Q1 and located on the gasket part 21. The first part of the third region Q3a and the second part of the third region Q3b are arranged at other two sides of the first region Q1 and located on the elastic plate part 22. The length of the gasket part 21 is provided as L1. A length of the first region Q1 extending along the gasket part 21 is provided as d1, where d1=05*L1. A width of the first region Q1 extending along the elastic plate part 22 is equal to a width of the gasket part 21. The first welding points 210 between the gasket 20 and the positive electrode cap 11 may be disposed in the first region Q1 or the first part of the second region Q2a and the second part of the second region Q2b. In some specific embodiments, the first welding points 210 between the gasket 20 and the positive electrode cap 11 are disposed in the first part of the second region Q2a and the second part of the second region Q2b. The first welding points 210 between the gasket 20 and the positive electrode cap 11 are disposed outside the first part of the third region Q3a and the second part of the third region Q3b. Through research, the Inventors have found that if the first welding points 210 between the gasket 20 and the positive electrode cap 11 are located in the first part of the third region Q3a and the second part of the third region Q3b, the first part of the third region Q3a and the second part of the third region Q3b where the gasket 20 is located will lose elasticity. When the positive electrode cap 11 bulges, since the region where the first flange 231 and the second flange 232 are located on the gasket 20 is welded on the positive electrode cap 11, the first flange 231 and the second flange 232 are separated from the positive electrode cap 15. This causes poor contact between the gasket 20 and the positive electrode cap 15, resulting in failure of the limiting effect of the first flange 231 and the second flange 232 on the positive electrode plate 15.

A method of assembling the button battery is further provided by the present disclosure. The method incudes following steps.

The positive electrode cap 11 and the gasket 20 are welded together to form a positive electrode cap assembly 220.

The positive plate 15 is pressed into the inner cavity of the positive electrode current collector 14 to form a collar positive electrode;

The negative plate 16 is placed into the inner cavity of the negative electrode cap 12. The separator 17 and the collar positive electrode are placed in sequence. The sealing ring 13 is wrapped on an outer surface of the negative electrode cap 12. After the electrolyte 19 is injected, the positive electrode cap assembly 220 is closed and sealed to form the button battery 1. After assembling is completed, the button battery 1 is pre-discharged and aged.

The gasket 20 is welded to the inner surface of the positive electrode cap 11. The positive electrode current collector 14 is placed on the gasket 20. The positive electrode current collector 14 and the gasket 20 are not completely concentric. That is, there is a positional deviation between the center of the positive electrode current collector 14 and the center of the gasket 20.

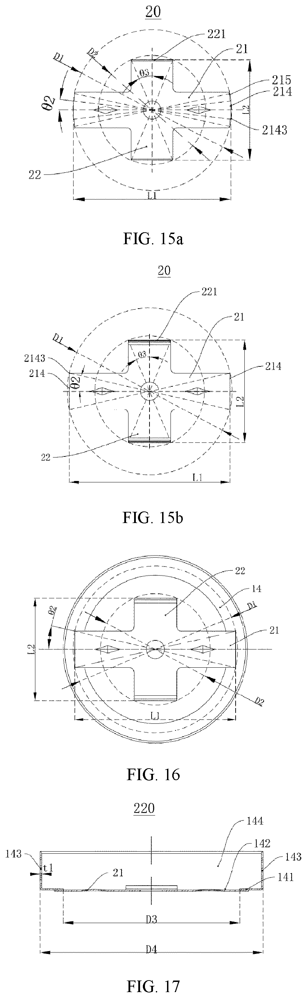

As shown in FIG. 14 to FIG. 17, the positive electrode current collector 14 includes the annular bottom wall 141. The annular bottom wall 141 is provided with the through hole 142. The two ends of the gasket part 21 are connected to the annular bottom wall 141. As shown in FIG. 15a, FIG. 15b, FIG. 16, and FIG. 17, a diameter of a circumscribed circle corresponding to an edge of the gasket part 21 is provided as D1. A diameter of a circumscribed circle corresponding to an edge of the elastic plate part 22 is provided as D2. A diameter of the through hole 142 of the positive electrode current collector 14 is provided as D3. A diameter of the annular bottom wall 141 of the positive electrode current collector 14 is provided as D4. A thickness of the positive electrode current collector 14 is provided as t1. The gasket part 21 includes two gasket end parts 214. One of the two gasket end parts 214 includes two gasket end points 2143. An included angle between two connecting lines between the two gasket end points 2143 and the center point of the gasket 20 is 2*θ2.

Continuing to refer to FIG. 15a, in some embodiments, the gasket part 21 includes two gasket side edges 215. Each of the two gasket side edges 215 is provided with one protruding gasket end part 214. The side edge where the gasket end part 214 is located includes two gasket end points 2143. An included angle between two connecting lines between the two gasket end points 2143 and the center point of the gasket 20 is 2*θ2. Continuing to refer to FIG. 15b, in other embodiments, the gasket part 21 includes two gasket side edges 215 provided as straight edges. Each of the gasket end parts 214 is constructed by a corresponding one of the two gasket side edges 215. Each of the gasket end parts 214 includes two gasket end points 2143. An included angle between two connecting lines between the two gasket end points 2143 and the center point of the gasket 20 is 2*θ2. In order to ensure that the two ends of the gasket part 21 of the gasket 20 are always in contact with the annular bottom wall 141 of the positive electrode current collector 14, (i.e., the two ends of the gasket part 21 are always located in a region Q3 where the annular bottom wall 141 of the positive electrode current collector 14 is located), and meanwhile that the two ends of the gasket part 21 are always overlapped in the region Q3 where the annular bottom wall 141 of the positive electrode current collector 14 is located after the battery is sealed, the Inventors have found through research that the length L1 of the gasket part 21 satisfies: L1=D1*cosθ2, and 1.02*D3*cosθ2≤L1≤0.98*(D4-2*t1)*cosθ2, i.e., 1.02*D3*cosθ2≤L1≤0.98*(D4-2t1)*cosθ2.

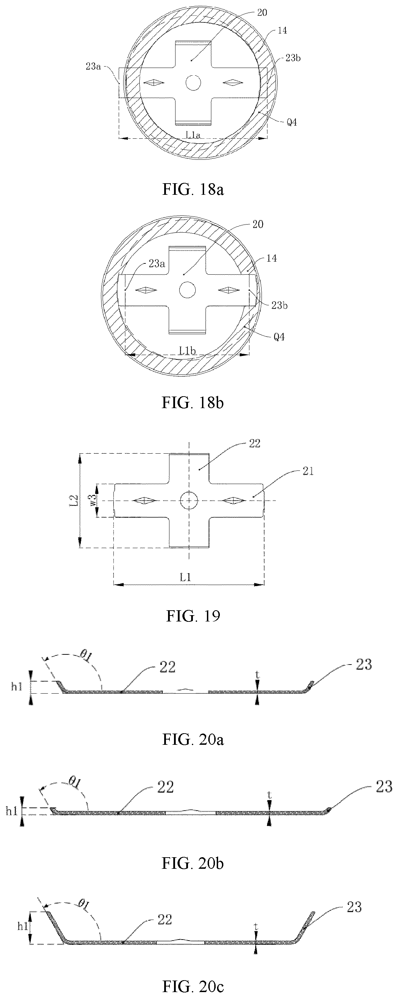

Continuing to refer to FIG. 18a, if the length of the gasket part 21 is provided as L1a, where L1a>0.98*(D4-2t1)*cosθ2, at least a part of a region where one of the flanges of the gasket 20 is located exceeds an edge of the positive electrode current collector 14, such as an exceeded region 23a shown in FIG. 18a. A region where the other one of the flanges of the gasket 20 is located does not exceed the edge of the positive electrode current collector 14, such as a non-exceeded region 23b shown in FIG. 18a. During a process of sealing the button battery 1, since an edge strength of the positive electrode current collector 14 is greater than a strength of the plane where the bottom wall of the positive electrode current collector 14 is located, a height of the gasket 20 corresponding to the exceeded region 23a exceeding the edge of the positive electrode current collector 14 is greater than a height of the gasket 20 corresponding to the non-exceeded region 23b not exceeding the edge of the positive electrode current collector 14. This causes a difference between high and low levels inside the positive electrode current collector 14, thereby reducing the current collecting effect of the positive electrode current collector 14.

Continuing to refer to FIG. 18b, if the length of the gasket part 21 is provided as L1b, where L1b < 1.02*D3*cosθ2, a region where one of the flanges of the gasket 20 is located is disposed in a region where the through hole 142 of the positive electrode current collector 14 is located, such as an exceeded region 23a shown in FIG. 18b. A region where the other one of flanges of the gasket 20 is located is disposed a plane region where the bottom wall of the positive electrode current collector 14 is located, such as a non-exceeded region 23b shown in FIG. 18a. During the process of sealing the button battery 1, since a height of the gasket 20 corresponding to the exceeded region 23a where one of the flanges of the gasket 20 is located at the through hole 142 of the positive electrode current collector 14 is greater than a height of the gasket 20 corresponding to the non-exceeded region 23b where the other one of the flanges of the gasket 20 is located at the plane where the bottom wall of the positive electrode current collector 14 is located. This causes the difference between high and low levels inside the positive electrode current collector 14, thereby reducing the current collecting effect of the positive electrode current collector 14.

Continuing to refer to FIG. 15a, FIG. 15b, FIG. 17, and FIG. 19, the length of the gasket part 21 is provided as L1. The length of the elastic plate part 22 is provided as L2. A width of the gasket part 21 extending along an extending direction of the elastic plate part 22 is provided as w3. The elastic plate part 22 includes two elastic plate end parts 222. Each of the two elastic plate end parts 222 includes two elastic plate end points 2223. An included angle between two connecting lines between the two elastic plate end points 2223 and the center point of the gasket 20 is 2*θ3. The diameter of the through hole 142 of the positive electrode current collector 14 is provided as D3. The first flange 231 and the second flange 232 of the gasket 20 are provided as the inclined structure with a certain inclination angle. When the button battery 1 is sealed, the first flange 231 and the second flange 232 are embedded inside the positive plate 15 to limit the positive plate 15. In order to ensure that the first flange 231 and the second flange 232 of the gasket 20 can always be embedded inside the positive plate 15 to be elastically connected to the positive plate 15 when there is the positional deviation between gasket 20 and positive electrode current collector 14 or the positive electrode cap 11 bulges outward, the Inventors have found through research that the length L2 of the elastic plate part 22 satisfies: 1.5*w3≤L2≤0.98*D3*cosθ3. If the length L2 of the elastic plate part 22 is greater than 0.98 *D3*cosθ3, the relative positional deviation between the gasket 20 and the positive electrode current collector 14 is too large, and any one or both of the first flange 231 and the second flange 232 cannot be embedded into the positive plate 15. If the length L2 of the elastic plate part 22 is less than 1.5*w3, when the positive electrode cap 11 bulges outward, any one or both of the first flange 231 and the second flange 232 of the gasket 20 move outward along with the positive electrode cap 11. This causes that any one or both of the first flange 231 and the second flange 232 are separated from the positive plate 15, resulting in failure of an elastic limiting effect of the gasket 20 on the positive electrode current collector 14 and a poor contact between the gasket 20 and the positive electrode current collector 14.

In the present disclosure, Embodiment 1, Comparative Example 1, and Comparative Example 2 are further provided. Variations of internal resistances of batteries of Embodiment 1, Comparative Example 1, and Comparative Example 2 in a high temperature environment are further verified by performing a high temperature storage experiment on the button batteries 1 provided by Embodiment 1, Comparative Example 1, and Comparative Example 2.

### Embodiment 1

The button battery 1 provided by Embodiment 1 includes a gasket 20. A cross-sectional structure of the gasket 20 is shown in FIG. 20a. A base surface 24 of the gasket 20 adopts a centrally circumferentially symmetrical cross structure, where L1=0.91*(D4-2*t1)*cosθ2, L2=0.72*D3*cosθ3, t=0.10, θ1=120°, and H1=4*t.

### Comparative Example 1

The button battery 1 provided by Comparative Example 1 includes a gasket 20. A cross-sectional structure of the gasket 20 is shown in FIG. 20b. A base surface 24 of the gasket 20 adopts a centrally circumferentially symmetrical cross structure, where L1=0.91*(D4-2*t1)*cosθ2, L2=0.72*D3*cosθ3, t=0.10, θ1=120°, and H1=10*t.

### Comparative Example 2

The button battery 1 provided by Comparative Example 2 includes a gasket 20. A cross-sectional structure of the gasket 20 is shown in FIG. 20c. A base surface 24 of the gasket 20 adopts a centrally circumferentially symmetrical cross structure, where L1=0.91*(D4-2*t1)*cosθ2, L2=0.72*D3*cosθ3, t=0.10, θ1=120°, and H1=2*t.

(High temperature storage experiment: internal resistance evaluation) For the button batteries of Embodiment 1, Comparative Example 1, and Comparative Example 2 obtained in the above order are performed to the high temperature storage experiment as described below is preformed, whereby the changes of the internal resistances under a high temperature environment are evaluated.

Specifically, first, the internal resistances (Ω) between the positive electrode and the negative electrode of each of the button batteries obtained in Embodiment 1, Comparative Example 1, and Comparative Example 2 are measured in a same method, and the initial resistances (Ω) are shown in Table 1 below. Next, the button batteries of Embodiment 1, Comparative Example 1, and Comparative Example 2 are stored in a high-temperature chamber with an internal temperature of 125 °C for one week. After one week of storage, the internal resistances (Ω) between the positive electrode and the negative electrode of the button batteries of Embodiment 1, Comparative Example 1, and Comparative Example 2 are measured using the same method. The values are used as the internal resistances (Ω) after one week of storage and are shown in Table 1 below.

**Table 1**

| Project | Height of flange | Internal internal resistance (Ω) | | Increase rate of internal resistance |
|---|---|---|---|---|
| | | Initial | After one week of storage | |
| Embodiment 1 | 4*t | 3.461 | 6.671 | 93% |
| Comparative Example 1 | 10*t | 13.370 | 22.934 | 72% |
| Comparative Example 2 | 2*t | 3.451 | 14.423 | 318% |

### Evaluation results:

As shown in Table 1, comparing Embodiment 1 (the height of the flange is 4*t, and the initial internal resistance is 3.461 Ω) with Comparative Example 1 (the height of the flange is 10*t, and the initial internal resistance is 13.370 Ω), the initial internal resistance of the button battery of Embodiment 1 has obvious advantages. After disassembling and analyzing of the batteries, the initial internal resistance of Comparative Example 1 is much higher than the initial internal resistance of Embodiment 1. The reason is that after the flange of the gasket 20 are embedded in the positive plate 15, the flange of the gasket 20 deforms and the positive plate 15 drops powder, resulting in poor internal contact, which leads to the initial internal resistance being much higher than that of Embodiment 1.

Comparing Embodiment 1 (the height of the flange is 4*t) with Comparative Example 2 (the height of the flange is 2*t), the initial internal resistances of the button batteries are not much different. However, after the button batteries are stored at 125 °C for one week, an internal resistance increase rate of the button battery provided by Comparative Example 2 is much higher than an internal resistance increase rate of the button battery provided by Embodiment 1. After CT image analysis of the button batteries, it is found that the flange of the gasket 20 of the button battery provided by Comparative Example 2 are separated from the positive plate 15, resulting in poor internal contact of the battery under high temperature storage.

### Embodiment 2

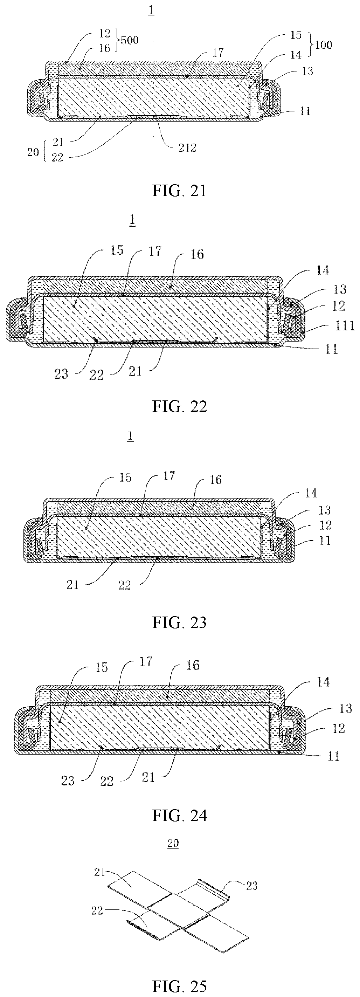

Referring to FIG. 21 to FIG. 24, a button battery 1 is provided by Embodiment 2 of the present disclosure. The button battery 1 includes a positive electrode cap 11, a negative electrode cap 12, a sealing ring 13, a positive electrode current collector 14, a positive plate 15, a negative plate 16, a separator 17, and an electrolyte 19. The positive electrode cap 11 is provided as an open cap-shaped structure. As shown in FIG. 21 and FIG. 22, an outer side surface of the positive electrode cap 11 may be constructed as an upright surface. As shown in FIG. 23 and FIG. 24, the outer side surface of the positive electrode cap 11 may be provided with a boss structure 111. The negative electrode cap 12 is provided as an open cap-shaped structure. An inner diameter and an outer diameter of the positive electrode cap 11 are both greater than an inner diameter and an outer diameter of the negative electrode cap 12, so that the positive electrode cap 11 can be capped over outside of the negative electrode cap 12. The sealing ring 13 is disposed on a connection position between the positive electrode cap 11 and the negative electrode cap 12. The sealing ring 13 wraps at least a part of an outer side wall of the negative electrode cap 12, so that a sealing connection structure is formed between the positive electrode cap 11 and the negative electrode cap 12. Moreover, the sealing ring 13 is further used to provide insulation between the positive electrode cap 11 and the negative electrode cap 12.

The positive electrode current collector 14 includes an annular bottom wall 141 and a side wall 143 circumferentially connected to the annular bottom wall 141. The annular bottom wall 141 and the side wall 143 enclose an accommodation cavity 144. The annular bottom wall 141 is provided with a through hole 142. An inner diameter of the positive electrode current collector 14 is less than the inner diameter of the negative electrode cap 12. The positive plate 15 is accommodated inside the accommodation cavity 144 of the positive electrode current collector 14 and is in contact with the positive electrode cap 11 through the through hole 142. During a process of assembling the battery, the positive plate 15 is placed inside the positive electrode current collector 14 to form a positive electrode assembly 100. The negative plate 16 is accommodated inside the inner cavity of the negative electrode cap 12. During the process of assembling the battery, the negative plate 16 is placed inside the negative electrode cap 12 to form a negative electrode assembly 500. The separator 17 is disposed between the positive plate 15 and the negative plate 16 for separating the positive plate 15 and the negative plate 16. A projection surface of the negative plate 16 on the separator 17 substantially coincides with a projection surface of the positive plate 15 on the separator 17. The electrolyte 19 is filled inside the entire button battery 1. After the electrolyte 19 is injected, internal structures such as the negative plate 16 and the positive plate 15 are in a state of being immersed in the electrolyte 19, and charged ions in the positive plate 15 and the negative plate 16 are electrically communicated by the electrolyte 19.

Referring to FIG. 21, FIG. 22, and FIG. 25, the button battery 1 further includes a gasket 20. The gasket 20 includes a gasket part 21 and an elastic plate part 22 connected with each other. The gasket part 21 and the elastic plate part 22 are separately provided. A length of the gasket part 21 is provided as L1, and a length of the elastic plate part 22 is provided as L2, where L1>L2. The gasket part 21 and the elastic plate part 22 are connected intersecting with each other. Two ends of the gasket part 21 are connected to the positive electrode current collector 14. The gasket 20 further includes a protruding structure 23. The protruding structure 23 passes through the through hole 142 of the positive electrode current collector 14 and is fixed to the positive plate 15. In some embodiments, the protruding structure 23 may be disposed on the gasket part 21 or the elastic plate part 22. In other embodiments, both the gasket part 21 and the elastic plate part 22 are provided with the protruding structure 23, respectively. In the button battery, the positive plate 15 is provided as a compacted powder structure, and the protruding structure 23 can be directly embedded in the positive plate 15. The gasket 20 is added into the button battery 1. The gasket 20 is connected to the positive electrode cap 11. The gasket 20 includes the gasket part 21 and the elastic plate part 22 intersected with each other. The length L1 of the gasket part 21 of the gasket 20 is greater than the length L2 of the elastic plate part 22. The two ends of the gasket part 21 are connected to the positive electrode current collector 14. The elastic plate part 22 is located inside the positive electrode current collector 14. At least one of the elastic plate part 22 and the gasket part 21 is further provided with the protruding structure 23 used for further fixing in the positive plate 15. The positive electrode cap 11 remains in contact with the positive electrode cap 11 and the positive electrode current collector 14 when the positive electrode cap 11 bulges, thereby improving the stability of the internal structures of the battery.

Referring to FIG. 21, FIG. 25, FIG. 26a, and FIG. 27a, the gasket part 21 includes a gasket base body 211 and a gasket boss 212 protruding with respect to the gasket base body 211. The gasket boss 212 and the gasket base body 211 define a gasket accommodating cavity 213. The gasket accommodating cavity 213 is configured to accommodate a part of the elastic plate part 22, so as to form a stable connection structure between the elastic plate part 22 and the gasket part 21. It may be understood that if the elastic plate part 22 is directly connected to the gasket base body 211 of the gasket part 21, the elastic plate base body 221 may be disposed protruding with respect to the gasket base body 211. When the gasket part 21 is connected to the positive electrode current collector 14, the elastic plate part 22 located inside the positive electrode current collector 14 needs to be completely embedded in the positive plate 15, thereby greatly increasing the difficulty of assembling the gasket 20 and the positive electrode assembly 100. Therefore, the gasket part 21 is provided with the gasket boss 212 protruding with respect to the gasket base body 211. The gasket accommodating cavity 213 is defined by the gasket boss 212 and the gasket base body 211. The elastic plate part 22 is placed inside the gasket accommodating cavity 213, so that the gasket base body 211 and the elastic plate base body 221 can be located in a same plane, thereby greatly reducing the difficulty of assembling the gasket 20 and the positive electrode assembly 100.

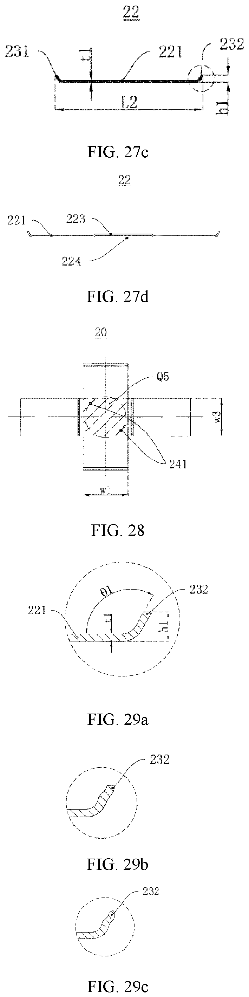

In other alternative embodiments, as shown in FIG. 27d, the elastic plate part 22 includes an elastic plate base body 221 and an elastic plate boss 223 protruding with respect to the elastic plate base body 22. The elastic plate boss 223 and the elastic plate base body 221 define an elastic plate accommodating cavity 224 configured to accommodate a part of the gasket part 21.

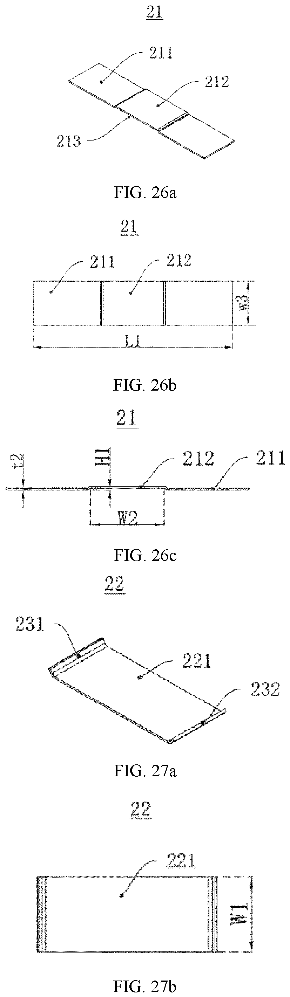

Continuing to refer to FIG. 26a, FIG. 26b, FIG. 26c, FIG. 27a, FIG. 27b, and FIG. 27c, a thickness of the elastic plate part 22 is provided as t1, and a height of the gasket boss 212 along a thickness direction of the button battery is provided as H1, where H1≥t1 . A width of the elastic plate part 22 is provided as w1, and a width of the gasket boss 212 is provided as w2, where w2=(1.05~1.3)*w1. Through research, Inventors have found that when the height H1 of the gasket boss 212 and the thickness t1 of the elastic plate part 22 satisfy: H1≥t1, the elastic plate part 22 can be completely accommodated inside the gasket accommodating cavity 213 defined by the gasket boss 212 along a thickness direction of the elastic plate part 22. When the height H1 of the gasket boss 212 and the thickness t1 of the elastic plate part 22 satisfy: H1<t1, at least apart of the elastic plate part 22 may protrude with respect to the gasket base body 211 of the gasket part 21 along the thickness direction of the elastic plate part 22, resulting in more space inside the button battery 1 occupied by the gasket 20.

Through research, the Inventors have found that when the width w2 of the gasket boss 212 and the width w1 of the elastic plate part 22 satisfy: w2=(1.05~1.3)*w1, the elastic plate part 22 can be completely accommodated inside the gasket accommodating cavity 213 defined by the gasket boss 212 along a width direction of the elastic plate part 22, and there is a sufficient fitting margin between the elastic plate part 22 and the gasket boss 212. If the width w2 of the gasket boss 212 and the width w1 of the elastic plate part 22 satisfy: w2<1.05*w1, and the elastic plate part 22 and the gasket part 21 are both made of a hard material, a part of the elastic plate part 22 cannot be assembled into the gasket accommodating cavity 213 defined by the gasket boss 212. If the width w2 of the gasket boss 212 satisfies: w2>1.3*w1, an assembling gap between the elastic plate part 22 and the gasket boss 212 is excessively large, resulting in a waste of an internal space of the button battery 1. Similarly, if the elastic plate boss 223 is disposed on the elastic plate part 22, the elastic plate accommodating cavity 224 is defined between the elastic plate boss 223 and the elastic plate base body 221, and a part of the gasket part 21 is accommodated inside the elastic plate accommodating cavity 224. Correspondingly, a thickness of the gasket part 21 is provided as t2, and a height of the elastic plate boss 223 along a thickness direction of the button battery is greater than or equal to the thickness t2 of the gasket part 21. A width of the gasket part 21 is provided as w3, and a ratio of a width of the elastic plate boss 223 to the width w3 of the gasket part 21 ranges from 1.05 to 1.3.

If the height of the elastic plate boss 223 and the thickness t2 of the gasket part 21 do not meet the above-mentioned dimensional requirements, at least a part of the gasket part 21 may protrude with respect to the elastic plate base body 22 along the thickness direction of the gasket part 21, resulting in more space inside the button battery 1 occupied by the gasket 20. If the ratio of the width of the elastic plate boss 223 to the width w3 of the gasket part 21 lies outside of the range of 1.05 to 1.3, the gasket may not be assembled inside the elastic plate accommodating cavity 224 defined by the elastic plate boss 223, or the assembling gap between the elastic plate part 22 and the gasket boss 212 is excessively large, resulting in the waste of the internal space of the button battery 1.

Continuing to refer to FIG. 27c, the thickness t1 of the elastic plate part 22 satisfies: 0.05 mm≤t1≤0.30 mm. In some specific embodiments, the thickness t1 of the elastic plate part 22 may be 0.05 mm, 0.1 mm, 0.15 mm, 0.20 mm, 0.25 mm, 0.30 mm, a value between any two of the above-mentioned values, or a range between any two of the above-mentioned values. Through research, the Inventors have found that when the thickness t1 of the elastic plate part 22 is less than 0.05 mm, an overall strength of the elastic plate part 22 is insufficient, and the elastic plate part 22 cannot be stably embedded into the positive plate 15. When the thickness t1 of the elastic plate part 22 is greater than 0.30 mm, an overall size of the elastic plate part 22 is larger, resulting in more internal space of the button battery occupied by the gasket 20. Through further research, the Inventors have found that in some embodiments, when the thickness t1 of the elastic plate part 22 ranges from 0.10 mm to 0.20 mm, the elastic plate part 22 can be optimized in terms of both between the strength and the size ratio.

Continuing to refer to FIG. 26c, the thickness t2 of the gasket part 21 satisfies: 0.05 mm≤t2≤0.30 mm. In some specific embodiments, the thickness t2 of the gasket part 21 may be 0.05 mm, 0.1 mm, 0.15 mm, 0.20 mm, 0.25 mm, 0.30 mm, a value between any two of the above-mentioned values, or a range between any two of the above-mentioned values. Through research, the Inventors have found that when the thickness t2 of the gasket part 21 is less than 0.05 mm, an overall strength of the gasket part 21 is insufficient, and the gasket part 21 cannot be stably embedded into the positive plate 15. When the thickness t2 of the gasket part 21 is greater than 0.30 mm, an overall size of the gasket part 21 is larger, resulting in more internal space of the button battery occupied by the gasket 20. Through further research, the Inventors have found that in some embodiments, when the thickness t2 of the gasket part 21 ranges from 0.10 mm to 0.20 mm, the gasket part 21 can be optimized in terms of both between the strength and the size ratio. The thickness t2 of the gasket part 21 and the thickness t1 of the elastic plate part 22 may be different, as long as they are still within the specified size range. Through further research, the Inventors have found that in some embodiments, the thickness t2 of the gasket part 21 and the thickness t1 of the elastic plate part 22 may be the same, so that the strength of the gasket 20 formed by connecting the gasket part 21 and the elastic plate part 22 is the same at all positions, which is conducive to providing stable connection between the positive electrode assembly and the positive electrode cap 11 as a whole.

A material suitable for manufacturing the gasket part 21 or the elastic plate part 22 includes a stainless-steel material. The suitable material may be at least one of SUS44, SUS304, SUS430, SUS316, and SUS444. The gasket part 21 and the elastic plate part 22 may be made of different stainless-steel materials with similar properties. In some embodiments, both the gasket part 21 and the elastic plate part 22 are made of the SUS430, so that the gasket part 21 and the elastic plate part 22 themselves are magnetic. This is conducive to welding the gasket part 21 and the elastic plate part 22, reducing the welding difficulty between the gasket part 21 and the elastic plate part 22, and improving the stability of welding. It may be understood that if the gasket part 21 and the elastic plate part 22 are made of the same stainless-steel material, it is beneficial to prevent potential difference between the gasket part 21 and the elastic plate part 22 from being formed.

Referring to FIG. 28, the elastic plate part 22 is welded to the gasket part 21 to form the gasket 20. An even number of second welding points 241 are provided between the elastic plate part 22 and the gasket part 21. For example, the number of the second welding points 241 may be two, four, six, or eight. In some embodiments, the number of the second welding points 241 is two. Through research, the Inventors have found that if one-point welding is adopted between the elastic plate part 22 and the gasket part 21 or the number of the second welding points 241 between the elastic plate part 22 and the gasket part 21 is an odd number greater than 1, an unstable welding between the elastic plate part 22 and the gasket part 21 will be caused, and relative positional deviation between the elastic plate part 22 and the gasket part 21 will be further generated. If three-point welding or four-point welding is adopted between the elastic plate part 22 and the gasket part 21, cost of the welding process is further increased, which is not conducive to improving the production efficiency. Therefore, in some specific embodiments, two welding points are provided between the elastic plate part 22 and the gasket part 21. Continuing to refer to FIG. 28, a welding region defined between the elastic plate part 22 and the gasket part 21 is provided as a circular welding region Q5. A distance between the two second welding points 241 is provided as a diameter of the circular welding region Q5. A center point of the circular welding region Q5 coincides with a center point of the gasket 20. The diameter of the circular welding region Q5 is less than or equal to the width w1 of the elastic plate part 22. The diameter of the circular welding region Q5 is less than the width w3 of the gasket part 21.

The circular welding region Q5 is formed by the elastic plate part 22 and the gasket part 21, and the center point of the circular welding region Q5 coincides with the center point of the gasket 20, so that a stable welding is formed between the elastic plate part 22 and the gasket part 21, and it is beneficial for the gasket 20 to form a centrally symmetrical structure. The diameter of the circular welding region Q5 is less than or equal to the width w1 of the elastic plate part 22, and the diameter of the circular welding region Q5 is less than or equal to the width w3 of the gasket part 21, so that the circular welding region Q5 is substantially located in a central intersection region between the elastic plate part 22 and the gasket part 21 without causing asymmetry between the elastic plate part 22 and the gasket part 21 with respect to the center of the spacer 20 after the elastic plate part 22 and the gasket part 21 are welded.

Continuing to refer to FIG. 22, FIG. 25, FIG. 27a, and FIG. 30, the protruding structure 23 includes a first flange 231 and a second flange 232 arranged on the elastic plate part 22. The first flange 231 is located on one end of the elastic plate part 22, and the second flange 232 is located on the other end of the elastic plate part 22. The first flange 231 and the second flange 232 mentioned above are embedded into the positive plate 15, respectively, so that a distance between the first flange 231 and the second flange 232 is configured as an range of action of the positive plate 15 that can be limited by the gasket 20 as a whole. If the first flange 231 and the second flange 232 are located at a middle position of the elastic plate part 22, the range of action of the positive plate 15 corresponding to the first flange 231 and the second flange 232 may be small, thereby weakening a limiting effect of the gasket 20 on the positive plate 15.

Continuing to refer to FIG. 27c, the first flange 231 and the second flange 232 are arranged symmetrically about the center of the gasket 20. A height of the first flange 231 and a height of the second flange 232 protruding from the elastic plate base body 221 are the same, and both are set to h1. In some embodiments, the height h1 of the first flange 231 or the second flange 232 and the thickness t1 of the elastic plate part 22 satisfy: 2*t1≤h1≤10*t1. In some embodiments, the h1 may be 2*t1, 3*t1, 4*t1, 5*t1, 6*t1, 7*t1, 8*t1, 9*t1, 10*t1, a value between any two of the above-mentioned values, or a range between any two of the above-mentioned values. Through research, the Inventors have found that when the height of the first flange 231 or the second flange 232 satisfies: 2*t≤h1≤10*t, after the first flange 231 and the second flange 232 are embedded in the positive plate 15, an overall structure of the positive plate 15 will not be damaged by the first flange 231 or the second flange 232, resulting in chip decay or powder loss. Moreover, the first flange 231 and the second flange 232 do not deforms during a process of being embedded in the positive plate 15.

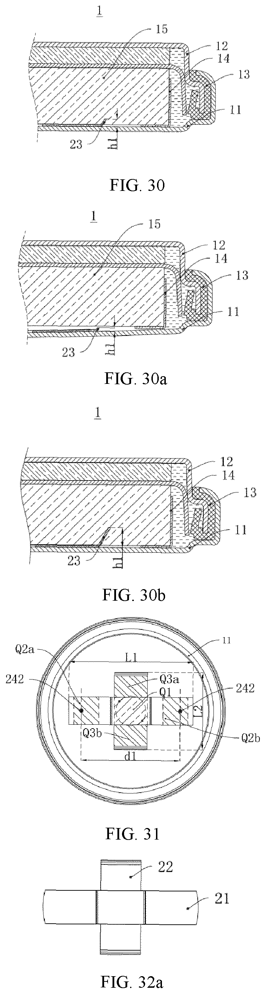

Referring to FIG. 30a, when the height h1 of the first flange 231 or the second flange 232 is less than 2*t, since a depth of the first flange 231 or the second flange 232 being embedded in the positive plate 15 is not large enough, the first flange 231 or the second flange 232 is prone to be separated from the positive plate 15 when the positive electrode cap 11 bulges outward, resulting in poor contact between the gasket 20 as a whole and the positive electrode current collector 14. Referring to FIG. 30b, when the height h1 of the first flange 231 or the second flange 232 is greater than 10*t, the first flange 231 and the second flange 232 need to be embedded in the positive plate 15 at a relatively large depth. During the process of the first flange 231 and the second flange 232 being embedded in the positive plate 15, the gasket 20 is prone to deform and the overall structure of the positive plate 15 is prone to be damaged.

Continuing to refer to FIG. 29a, the included angle defined by an extension line of an outer tangent plane of the first flange 231 or the second flange 232 and a plane where the elastic plate part 22 is located is provided as θ1, where 90°≤01≤150°. In some specific embodiments, the first flange 231 or the second flange 232 are arranged symmetrically about the center of the gasket 20. The included angle defined by the extension line of the outer tangent plane of the first flange 231 and the plane where the elastic plate part 22 is located is the same as the included angle defined by the extension line of the outer tangent plane of the second flange 232 and the plane where the elastic plate part 22 is located, and both are provided as θ1. The θ1 needs to satisfy 90°≤θ1≤150°. For example, the θ1 may be 90°, 100°, 110°, 120°, 130°, 140°, 150°, an angle between any two of the above-mentioned angles, or a range between any two of the above-mentioned angles. Through research, the Inventors have found that when the θ1 is less than 90 °, the first flange 231 or the second flange 232 are difficult to be embedded in the positive plate 15. When the θ1 is greater than 150°, a range of the first flange 231 or the second flange 232 being embedded in the positive plate 15 is too large, and the overall structure of the positive plate 15 is prone to be damaged, resulting in powder loss falling off of the positive plate 15.

Referring to FIG. 29a, the first flange 231 or the second flange 232 may be provided as a straight-edged inclined structure. As shown in FIG. 9b, the first flange 231 or the second flange 232 may also be provided in a wave-shaped inclined structure. As shown in FIG. 9c, the first flange 231 or the second flange 232 may also be provided as an inclined structure having a sharp angle structure at an end part. Referring to FIG. 21 and FIG. 26a, the protruding structure 23 further includes the gasket boss 212 disposed on the gasket part 21. The gasket boss 212 passes through the through hole 142 and is embedded inside the positive plate 15. The gasket boss 212 is located substantially at a center of the gasket base body 211. The gasket boss 212 protrudes with respect to a plane where the gasket base body 211 is located. The gasket boss 212 defines the gasket accommodating cavity 213. The gasket accommodating cavity 213 is configured to accommodate at least the part of the elastic plate part 22. The gasket boss 212 can be embedded in the positive plate 15, thereby providing a fixing effect on the positive plate 15. The gasket part 21 and the elastic plate part 22 are welded to form the gasket 20. A rib-like structure is formed on the elastic plate part 22 by the gasket boss 212, so that the gasket boss 212 has a high strength after being embedded in the positive plate 15. The gasket boss 212 and the elastic plate part 22 are combined to form a protruding structure with a high embedding strength, so that the above-mentioned protruding structure can maintain strong contact with the positive plate 15. When the positive electrode cap 11 bulges outward, the positive electrode cap 11 is not prone to be separated from the positive plate 15, thereby avoiding poor contact.

Moreover, if the gasket part 21 and the elastic plate part 22 are provided as an integral structure, a strength of the gasket boss 212 is low, which corresponds to the situation that the elastic plate part 22 is not accommodated inside the gasket accommodating cavity 213 defined by the gasket boss 212. When the height H1 of the gasket boss 212 is high, the gasket boss 212 is embedded in the positive plate 15 and easily deforms. However, when the height H1 of the gasket boss 212 is small, although the strength of the gasket boss 212 can be improved, the gasket boss 212 cannot be embedded in the positive plate 15, or a depth of the gasket boss 212 embedded in the positive plate 15 is not large enough, so that an effective fixing effect cannot be provided.

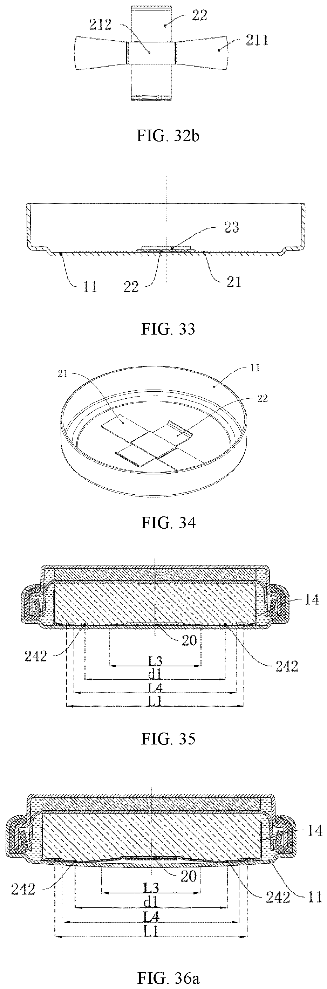

Referring to FIG. 31, an orthographic projection of the gasket 20 on the positive electrode cap 11 is in the shape of a cross, and an orthographic projection of each of the elastic plate part 22 and the gasket part 21 on the positive electrode cap 11 is in a straight shape. Each of the gasket 20 and the positive electrode cap 11 is provided in a centrally symmetrical structure. The center of the gasket 20 and the center of the positive electrode cap 11 substantially coincide with the center of the positive electrode cap 11. The gasket 20 is provided in a cross-shaped structure, and the orthographic projection of each of the elastic plate part 22 and the gasket part 21 on the positive electrode cap 11 is in the straight shape, so that two ends of the gasket part 21 each having a relatively large length in the gasket 20 are connected to the positive electrode current collector 14, and the elastic plate part 22 having a smaller length in the gasket 20 is located inside the positive electrode current collector 14. As shown in FIG. 31, the cross-shaped structure of the gasket 20 may be a regular cross-shaped structure. The cross-shaped structure of the gasket 20 may be an irregular cross-shaped structure. As shown in FIG. 32a, the two ends of the gasket part 21 are provided in an arc-shaped structure. Alternatively, as shown in FIG. 32b, the gasket base body 211 includes two parts of the gasket base body 211 located on two sides of the gasket boss 212, and both of the two parts of the gasket base body 211 are provided in a fan-shaped structure, respectively.

Referring to FIG. 31, FIG. 33, and FIG. 34, the gasket 20 is welded to the positive electrode cap 11. The gasket 20 and the elastic plate end points 2223 are respectively arranged as the centrally symmetrical structure. A concentricity between the gasket 20 and the positive electrode cap 11 is less than or equal to 0.3 mm. During a process of welding the gasket 20 and the positive electrode cap 11, the concentricity between the gasket 20 and the positive electrode cap 11 needs to be controlled to be less than or equal to 0.3 mm. In some embodiments, the concentricity between the gasket 20 and the positive electrode cap 11 is less than or equal to 0.1 mm. Through research, the Inventors have found that if the concentricity between the positive electrode cap 11 and the gasket 20 is greater than 0.3 mm, deviation between the gasket 20 and the positive electrode cap 11 is serious, and thus deviation between the gasket 20 and the positive electrode current collector 14 is serious, thereby reducing a current collecting effect of the positive electrode current collector 14, and further affecting the electrical performance of the button battery 1.

Continuing to refer to FIG. 31, at least two third welding points 242 are provided between the gasket 20 and the positive electrode cap 11. At least two of the third welding points 242 are symmetrically arranged with respect to a center point of the gasket 20. Through research, the Inventors have found that during the process of welding the gasket 20 and the positive electrode cap 11, a number of the third welding points 242 formed by welding the gasket 20 and the positive electrode cap 11 is two. Two third welding points 242 contribute to improving a welding strength between the gasket 20 and the positive electrode cap 11. If the number of the third welding points 242 formed between the gasket 20 and the positive electrode cap 11 by welding is one, the gasket 20 is prone to be deviated and warped with respect to the positive electrode cap 11. If the number of the third welding points 242 formed between the gasket 20 and the positive electrode cap 11 by welding is more than two, the welding process between the gasket 20 and the positive electrode cap 11 is complicated, and the welding cost is further increased.

Continuing to refer to FIG. 31 and FIG. 35, a position of a welding region between the gasket 20 and the positive electrode cap 11 is optimized to further improve the stability performance of the button battery 1. The base surface 24 of the gasket 20 configured to be welded is divided into five regions, i.e., a first region Q1, a first part of a second region Q2a, a second part of the second region Q2b, a first part of a third region Q3a, and a second part of the third region Q3b. The first region Q1 is located at the intersection region of the gasket part 21 and the elastic plate part 22. The first part of the second region Q2a and the second part of the second region Q2b are arranged at two sides of the first region Q1 and located on the gasket part 21. The first part of the third region Q3a and the second part of the third region Q3b are arranged at other two sides of the first region Q1 and located on the elastic plate part 22. The third welding points 242 between the gasket 20 and the positive electrode cap 11 may be disposed in the first part of the second region Q2a and the second part of the second region Q2b, and the third welding points 242 between the gasket 20 and the positive electrode cap 11 may be disposed outside the first part of the third region Q3a and the second part of the third region Q3b. Through research, the Inventors have found that if the third welding points 242 between the gasket 20 and the positive electrode cap 11 are located in the first part of the third region Q3a and the second part of the third region Q3b, the first part of the third region Q3a and the second part of the third region Q3b where the gasket 20 is located will lose elasticity. When the positive electrode cap 11 bulges, since the region where the first flange 231 and the second flange 232 are located on the gasket 20 is welded on the positive electrode cap 11, the first flange 231 and the second flange 232 are separated from the positive electrode cap 15 This causes poor contact between the gasket 20 and the positive electrode cap 15, resulting in failure of the limiting effect of the first flange 231 and the second flange 232 on the positive electrode plate 15. It should be noted that since the first region Q1 is provided as the welding region between the gasket part 21 and the elastic plate part 22, the first region Q1 can no longer be the welding region between the gasket 20 and the positive electrode cap 11.

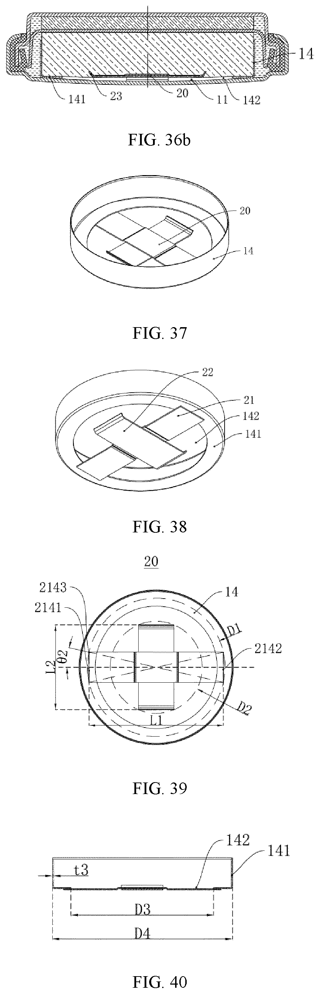

Continuing to refer to FIG. 27b, FIG. 31, and FIG. 35, a distance between any two of the at least two third welding points 242 is defines as d1, where 0.3*L1+0.7*w1≤d1≤0.9*L1+0.1*w1. L1 is provided as the length of the gasket part 21, and w1 is provided as the width of the elastic plate part 22. Through research, the Inventors have found that in order to ensure the consistency of the performance after welding between the gasket 20 and the positive electrode cap 11, the two third welding points 242 are provided between the gasket 20 and the positive electrode cap 11. The two third welding points 242 are symmetrically distributed with respect to the center of the gasket 20. Moreover, in order to ensure that the button battery is applied at high temperature, when the positive electrode cap 11 bulges outward, the gasket 20 is connected to the positive electrode assembly, and the gasket 20 is connected to the positive electrode cap 11 and no contact gap is generated therebetween. Therefore, the distance d1 between the two third welding points 242 satisfies: 0.3*L1+0.7*w1≤d1≤0.9*L1+0.1*w1. As shown in FIG. 35. FIG. 36a, and FIG. 36b, L3=0.3*L1+0.7*w1, L4=0.9*L1+0.1*w1, and L3≤d1≤L4. When the distance d1 between the two third welding points 242 is too large, i.e. d1 >0.9*L1+0.1*w1, the third welding points 242 are arranged adjacent to an edge of the gasket 20. The welding strength between the gasket 20 and the positive electrode cap 11 is low. When the positive electrode cap 11 bulges outward, the gasket 20 is prone to be separated from the positive electrode cap 11, and the connection between the gasket 20 and the positive electrode cap 11 is failed. As shown in FIG. 36a and FIG. 36b, when the distance d1 between the two third welding points 242 is too small, i.e. d1 < 0.9*L1+0.1 *w1, the third welding points 242 are arranged adjacent to the center of the circle of the gasket 20. When the positive electrode cap 11 bulges outward, the gasket 20 bulges outward following the positive electrode cap 11, and thereby the gasket 20 is prone to be separated from the positive electrode cap 11, resulting in failure of the limiting effect of the gasket 20 on the positive plate 15 and poor contact between the positive plate 15 and the positive electrode cover 11.

Referring to FIG. 35, FIG. 37, and FIG. 38, the positive electrode current collector 14 includes the annular bottom wall 141. The annular bottom wall 141 is provided with the through hole 142. The two ends of the gasket part 21 are connected to the annular bottom wall 141, so that the two ends of the gasket part 21 are pressed between the annular bottom wall 141 and the positive electrode cap 11, and the positive plate 15 accommodated inside the positive electrode cap 11 is in contact with the positive electrode cap 11 through the through hole 142. Referring to FIG. 37, FIG. 41, and FIG. 42a, a diameter of a circumscribed circle corresponding to an edge of the gasket part 21 is provided as D1. A diameter of a circumscribed circle corresponding to an edge of the elastic plate part 22 is provided as D2. The gasket part 21 includes a first gasket end part 2141 and a second gasket end part 2142 arranged oppositely. The first gasket end part 2141 includes two gasket end parts 2143. An included angle between two connecting lines between the two gasket end points 2143 and the center point of the gasket part 21 is 2*θ2. A diameter of the through hole 142 of the positive electrode current collector 14 is provided as D3. A diameter of the annular bottom wall 141 of the positive electrode current collector 14 is provided as D4. A thickness of the positive electrode current collector 14 is provided as t3. The length L1 of the gasket part 21 satisfies: L1=D1*cosθ2, and 1.02*D3*cos92≤L1≤0.98*(D4-2*t3)*cosθ2. The two ends of the gasket part 21 of the gasket 20 are always in contact with the annular bottom wall 141 of the positive electrode current collector 14. After the button battery 1 is sealed, the two ends of the gasket part 21 are still overlapped on the annular bottom wall 141 of the positive electrode current collector 14. Through research, the Inventors have found that in some embodiments, the length L1 of the gasket part 21 satisfies: 1.02D3*cos θ2≤L1 0. 98*(D4-2t3)*cosθ2.

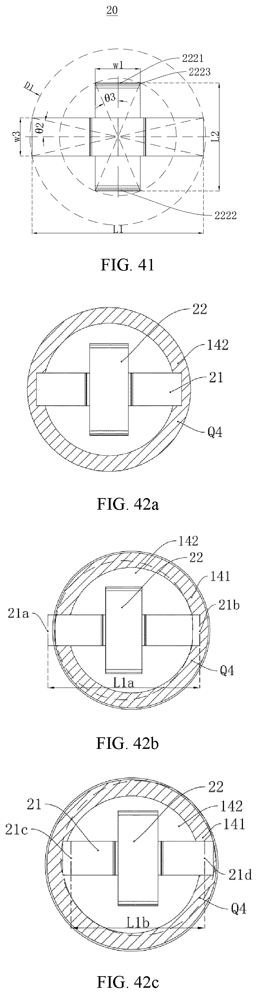

Continuing to refer to FIG. 42b, if the length of the gasket part 21 is provided as L1a, where L1a>(D4-2*t3)*cosθ2, at least a part of a region where one end of the gasket part 21 is located exceeds a region Q4 where the annular bottom wall 141 of the positive electrode current collector 14 is located, such as an exceeded region 21a shown in FIG. 42b. The other end of the gasket part 21 is not in contact with the region Q4 where the annular bottom wall 141 is located, such as the non-exceeded region 41b shown in FIG. 42b. During a process of sealing the button battery 1, since an edge strength of the positive electrode current collector 14 is greater than a strength of the plane where the annular bottom wall 141 of the positive electrode current collector 14 is located, a height corresponding to the exceeded region 21a of the gasket part 21 exceeding the edge of the positive electrode current collector 14 is greater than a height corresponding to the non-exceeded region 21b of the gasket part 21 not exceeding the edge of the positive electrode current collector 14. This causes a difference between high and low levels inside the positive electrode current collector 14, thereby reducing the current collecting effect of the positive electrode current collector 14. Continuing to refer to FIG. 42c, if the length of the gasket part 21 is provided as L2b, where L1b<1.02*D3*cosθ2, a region where one end of the gasket part 21 is located is disposed in a region where the through hole 142 of the positive electrode current collector 14 is located, such as an exceeded region 41c shown in FIG. 42c. The other end of the gasket part 21 is located in the planar region Q4 where the annular bottom wall 141 of the positive electrode current collector 14 is located, such as the non-exceeded region 21d shown in FIG. 42c. During the process of sealing the button battery 1, a height corresponding to the exceeded region 21c where one end of the gasket part 21 the through hole 142 of the positive electrode current collector 14 are located is greater than a height corresponding to the non-exceeded region 21d where the other end of the gasket part 21 is located in the plane where the annular bottom wall 141 of the positive electrode current collector 14 is located. This causes a difference between high and low levels inside the positive electrode current collector 14, thereby reducing the current collecting effect of the positive electrode current collector 14.

Continuing to refer to FIG. 39 to FIG. 42, the elastic plate part 22 includes a first elastic plate end part 2221 and a second elastic plate end part 2222. The first elastic plate end part 2221 includes two elastic plate end points 2223. An included angle between two connecting lines between the two elastic plate end points 2223 and a center point of the elastic plate part 22 is 2*θ3. The length L2 of the elastic plate part (22) satisfies: 1.5*w3≤L2≤0.98*D3*cosθ3, where w3 is the width of the gasket part 21, and D3 is the inner diameter of the through hole 142. When the button battery 1 is sealed, the first flange 231 and the second flange 232 of the elastic plate part 22 are embedded inside the positive plate 15 to limit the positive plate 15. Through research, the Inventors have found that in order to ensure that the first flange 231 and the second flange 232 of the gasket 20 can still be embedded inside the positive plate 15 to be elastically connected to the positive plate 15 when there is the positional deviation between gasket 20 and positive electrode current collector 14 or the positive electrode cap 11 bulges outward, the length L2 of the elastic plate part 22 satisfies: 1.5*w3≤L2≤0.98*D3*cosθ3. If the length L2 of the elastic plate part 22 is greater than 0.98 *D3*cosθ3, the relative positional deviation between the gasket 20 and the positive electrode current collector 14 is too large, and any one or both of the first flange 231 and the second flange 232 cannot be embedded into the positive plate 15. If the length L2 of the elastic plate part 22 is less than 1.5*w3, when the positive electrode cap 11 bulges outward, any one or both of the first flange 231 and the second flange 232 of the gasket 20 move outward along with the positive electrode cap 11. This causes that any one or both of the first flange 231 and the second flange 232 are separated from the positive plate 15, resulting in failure of an elastic limiting effect of the gasket 20 on the positive electrode current collector 14 and a poor contact between the gasket 20 and the positive electrode current collector 14.

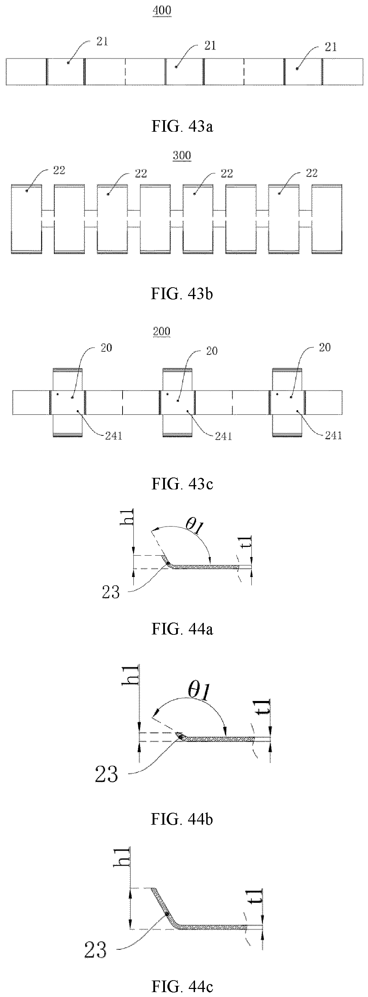

A method of manufacturing the gasket of the button battery 1 is further provided by the present disclosure. Referring to FIG. 43a, FIG. 43b, and FIG. 43c, the method of manufacturing the gasket 20 includes following steps.

As shown in FIG. 43a, a gasket combination 400 having a plurality of gaskets parts 21 connected in the shape of a band is formed by a stamping process.

As shown in FIG. 43b, an elastic plate combination 300 having a plurality of elastic plate parts 22 connected in the shape of a band is formed by a stamping process.

As shown in FIG. 43c, a center point of the elastic plate combination 300 and a center point of the gasket combination 400 are adjusted to be coincided. The elastic plate combination 300 and the gasket combination 400 are welded together by using a laser welding apparatus to form a gasket assembly 200 having a plurality of gaskets 20 connected with each other.

Compared with the manufacturing method in which a single gasket and a single elastic plate are welded one by one to form the gasket 20, the manufacturing method of the gasket 20 mentioned above can effectively improve the production efficiency of the gasket 20 and reducing the cost of the assembling processes.

A method of assembling a button battery is further provided by the embodiments of the present disclosure. The method of assembling the button battery includes following steps.

Step 1, the gasket assembly 200 mentioned above is cut to form a plurality of single gaskets 20.

Step 2, as shown in FIG. 44, after a relative position between the gasket 20 and the positive electrode cap 11 is adjusted, the gasket 20 and the positive electrode cap 11 are welded together to form a positive electrode cap assembly 220.

Step 3, the positive plate 15 is placed into the positive electrode current collector 14 to form a positive electrode assembly 100.

Step 4, a negative plate 16 is placed into a negative electrode cap 12 to form a negative electrode assembly 500.

Step 5, a separator 17 and the positive electrode assembly 100 are sequentially placed into the negative electrode assembly 500 to form an assembly.

Step 6, an electrolyte 19 is injected into the assembly.

Step 7, an end of the assembly 220 is covered by the positive electrode cap assembly 220 and sealed to form the button battery 1.

It should be noted that the order of each step in the above-described manufacturing method can be adjusted according to needs of the actual assembly process, and is not limited to the order described in the above-described embodiments.

In the present disclosure, Embodiment 2 and Comparative Examples 3 to 6 are further provided. Changes of internal resistances of batteries of Embodiment 2 and Comparative Examples 3 to 6 in a high temperature environment are further verified by performing a high temperature storage experiment on the button batteries 1 provided by Embodiment 2, Comparative Example 3, Comparative Example 4, Comparative Example 5, and Comparative Example 6.

### Embodiment 2

Referring to FIG. 44a, the button battery provided by Embodiment 2 includes a gasket 20. A structure of the gasket 20 is shown in FIG. 25. Each of a gasket base body and an elastic plate base body is a straight-shaped structure. A length L1 of the gasket 20 satisfies: L1=0.91*(D4-2*t3)*cosθ2. A length L2 of an elastic plate satisfies: L2=0.72*D3*cosθ3. A thickness t2 of the gasket or a thickness t1 of the elastic plate satisfies: t1=t2=0.10. An angle of a first flange or a second flange θ1 satisfies: θ1=120°. A height h1 of the first flange or the second flange satisfies: h1=4*t1.

### Comparative Example 3

Referring to FIG. 44c, the button battery provided by Comparative Example 3 includes a gasket 20. A structure of the gasket 20 is shown in FIG. 25. Each of a gasket base body and an elastic plate base body is a straight-shaped structure. A length L1 of the gasket satisfies: L1=0.91*(D4-2*t3)*cosθ2. A length L2 of the elastic plate satisfies: L2=0.72*D3*cosθ3. A thickness t2 of the gasket or a thickness t1 of the elastic plate satisfies: t1=t2=0.10. An angle of a first flange or a second flange θ1 satisfies: θ1=120°. A height h1 of the first flange or the second flange satisfies: h1=10*t1.

### Comparative Example 4

Referring to FIG. 44b, the button battery provided by Comparative Example 4 includes a gasket 20. A structure of the gasket 20 is shown in FIG. 25. Each of a gasket base body and an elastic plate base body is a straight-shaped structure. A length L1 of the gasket satisfies: L1=0.91*(D4-2*t3)*cosθ2. A length L2 of the elastic plate satisfies: L2=0.72*D3*cosθ3. A thickness t2 of the gasket or a thickness t1 of the elastic plate satisfies: t1=t2=0.10. An angle of a first flange or a second flange θ1 satisfies: θ1=120°. A height h1 of the first flange or the second flange satisfies: h1=2*t1.

### Comparative Example 5

The button battery provided by Comparative Example 3 includes a gasket 20. A structure of the gasket 20 is shown in FIG. 25. Each of a gasket base body and an elastic plate base body is a straight-shaped structure. A length L1 of the gasket satisfies: L1=(D4-2*t3)*cosθ2. A length L2 of the elastic plate satisfies: L2=0.72*D3*cosθ3. A thickness t2 of the gasket or a thickness t1 of the elastic plate satisfies: t1=t2=0.10. An angle of a first flange or a second flange θ1 satisfies: θ1=120°. A height h1 of the first flange or the second flange satisfies: h1=4*t1.

### Comparative Example 6

The button battery provided by Comparative Example 3 includes a gasket 20. A structure of the gasket 20 is shown in FIG. 25. Each of a gasket base body and an elastic plate base body is a straight-shaped structure. A length L1 of the gasket satisfies: L1=0.90*D3*cosθ2. A length L2 of the elastic plate satisfies: L2=0.72*D3*cosθ3. A thickness t2 of the gasket or a thickness t1 of the elastic plate satisfies: t1=t2=0.10*t. An angle of a first flange or a second flange θ1 satisfies: θ1=120°. A height h1 of the first flange or the second flange satisfies: h1=4*t1.

### High temperature storage test (internal resistance evaluation):

For the button batteries of Embodiment 2, Comparative Example 3, Comparative Example 4, Comparative Example 5, and Comparative Example 6 obtained in the above order, a high temperature storage experiment as described below is performed, whereby the changes of the internal resistances under a high temperature environment are evaluated.

Specifically, first, the internal resistances (Ω) between the positive electrode and the negative electrode of each of the button batteries obtained in Embodiment 2, Comparative Example 3, Comparative Example 4, Comparative Example 5, and Comparative Example 6 are measured in a same method, and the initial resistances (Ω) are shown in Table 2 below. Next, the button batteries of Embodiment 2, Comparative Example 3, Comparative Example 4, Comparative Example 5, and Comparative Example 6 are stored in a high-temperature chamber with an internal temperature of 125 °C for one week. After one week of storage, the internal resistances (Ω) between the positive electrode and the negative electrode of the button batteries of Embodiment 2, Comparative Example 3, Comparative Example 4, Comparative Example 5, and Comparative Example 6 are measured using the same method. The values are used as the internal resistances (Ω) after one week of storage and are shown in Table 2 below.

**Table 2**

| Project | Height of flange h1 | Length of gasket L1 | Internal internal resistance (Ω) | | Increase rate of internal resistance |
|---|---|---|---|---|---|
| | | | Initial | After 1 week of storage | |
| Embodiment 2 | 4*t1 | 0.91*(D4-2*t3)*cosθ2 | 3.259 | 6.421 | 97% |
| Comparative Example 3 | 10*t1 | 0.91*(D4-2*t3)*cosθ2 | 12.461 | 21.396 | 72% |
| Comparative Example 4 | 2*t1 | 0.91*(D4-2*t3)*cosθ2 | 3.891 | 14.991 | 285% |
| Comparative Example 5 | 4*t1 | (D4-2*t3)*cosθ2 | 3.459 | 6.881 | 160% |
| Comparative Example 6 | 4*t1 | 0.90*D3*cosθ2 | 3.169 | 10.869 | 216% |

### Evaluation results:

As shown in Table 2, comparing Embodiment 2 with Comparative Example 3, the height h1 of the first flange or the second flange of the gasket of the button battery of Embodiment 2 is 4*t1, and the initial internal resistance is 3.259 Ω. The height h1 of the first flange or the second flange of the gasket of the button battery of Comparative Example 3 is 10*t1. It can be seen that the initial internal resistance of the button battery of Embodiment 2 is significantly better than the initial internal resistance of the button battery of Comparative Example 3. After disassembling and analyzing the batteries, the initial internal resistance of the button battery of Comparative Example 3 is much higher than the initial internal resistance of the button battery of Embodiment 2. The reason is that after the first flange or the second flange of the button battery of Comparative Example 3 is embedded in the positive plate, the first flange or the second flange of the button battery deforms, resulting in powder loss falling off of the positive plate 15. This causes poor internal contact, so that the initial internal resistance of the button battery of Comparative Example 3 is much higher than the initial internal resistance of the button battery of Embodiment 2.

As shown in Table 2, comparing Embodiment 2 with Comparative Example 4, the height h1 of the first flange or the second flange of the gasket of the button battery of Embodiment 2 is 4*t1, and the height h1 of the first flange or the second flange of the gasket of the button battery of Comparative Example 4 is 2*t1 The initial internal resistance of the button battery of Embodiment 2 and the initial internal resistance of the button battery of Comparative Example 4 are not much different. However, after the button batteries are stored at 125 °C for one week, an internal resistance increase rate of the button battery of Comparative Example 4 is much higher than an internal resistance increase rate of the button battery of Embodiment 2. After CT image analysis of the button batteries, it is found that a part of the first flange or the second flange of the gasket assembly of the button battery provided by Comparative Example 4 is separated from the positive plate, resulting in poor internal contact of the button battery under the high temperature storage.

The results of the embodiments and comparative examples mentioned above show that by providing the height h1 of the first flange or the second flange of the gasket of the button battery to the conditions specified in the present disclosure, the internal contact of the battery can be increased, thereby improving a purpose of improving the stability of the battery. Moreover, the poor internal contact caused by bulging outward of the positive electrode cap can be effectively prevented in a high temperature environment, so that characteristics of the button battery are not deteriorated, and the stability of the electrical performance of the battery is higher.

Comparing Embodiment 2 with Comparative Example 5, the length of the length of the gasket part of the gasket of the button battery of Embodiment 2 is 0.91 *(D4-2*t3)*cosθ2, and the length of the gasket part of the gasket of the button battery of Comparative Example 5 is (D4-2*t3)*cosθ2. As can be obtained from the data in Table 2, when the length of the gasket is too large, the initial internal resistance of the button battery of Comparative Example 5 is close to the initial internal resistance of the button battery of Embodiment 2. However, after the button batteries are stored at 125 °C for one week, it is found that the internal resistance increase rate of the button battery of Comparative Example 5 is much greater than the internal resistance increase rate of the button battery of Embodiment 2. It is found that there are obvious recesses and protrusions on the positive electrode cap of Comparative Example 5. When the button batteries of Comparative Example 5 and Embodiment 2 are placed in the CT to be scanned and observed, it is found that the length of the gasket exceeding the positive electrode current collector at the protrusion position of the positive electrode cap of the button battery of Comparative Example 5. Therefore, it can be analyzed that after the part of the length of the gasket part exceeds the positive current collector, the gasket part and the positive current collector form a rib-like structure, resulting in different strengths at different positions of the gasket part and the positive current collector when the battery is sealed. When the positive electrode cap of the button battery bulges, the internal resistance of the button battery is unstable and increases after high-temperature storage.

Comparing Embodiment 2 with Comparative Example 6, the length of the length of the gasket part of the gasket of the button battery of Embodiment 2 is 0.91 *(D4-2*t3)*cosθ2, and the length of the gasket part of the gasket of the button battery of Comparative Example 6 is 0.90*D3*cosθ2. As can be obtained from the data in Table 2, when the length of the gasket is too small, the internal resistance increase rate of the button battery of Comparative Example 6 is close to the internal resistance increase rate of the button battery of Embodiment 2. However, after the button batteries are stored at 125 °C for one week, it is found that the internal resistance increase rate of the button battery of Comparative Example 6 is as high as 216%, which is much greater than the internal resistance increase rate of the button battery of Embodiment 2. First, after CT observation of the button battery of Comparative Example 6, one side of the gasket part is not disposed in the region Q4 where the annular bottom wall of the positive electrode current collector is located. At the position of the positive electrode cap bulging outward, there is a fine gap between the gasket part and the positive electrode current collector. After disassembling and analyzing the battery, one side of the gasket part is not disposed in the region Q4 where the annular bottom wall of the positive electrode current collector is located. The gasket is partially separated from the positive plate, resulting in poor contact and increased internal resistance.

## Claims

1. A button battery (1), **characterized in that** the button battery (1) comprises:
a positive electrode cap assembly (220) comprising a positive electrode cap (11) and a gasket (20) mounted inside the positive electrode cap (11);
a positive electrode current collector (14) disposed inside the positive electrode cap (11) and provided with an accommodation cavity (144), wherein a bottom wall of the positive electrode current collector (14) is provided with a through hole (142); and
a positive plate (15) disposed inside the accommodation cavity (144);
wherein the gasket (20) comprises a gasket part (21) and an elastic plate part (22) intersected with each other, a length of the gasket part (21) is provided as L1, a length of the elastic plate part (22) is provided as L2, where L1>L2, at least one of the elastic plate part (22) and the gasket part (21) is provided with a protruding structure (23), and the protruding structure (23) passes through the through hole (142) and is fixed to the positive plate (15).

2. The button battery (1) according to claim 1, **characterized in that** the gasket part (21), the elastic plate part (22), and the protruding structure (23) are integrally formed, and a thickness of the gasket (20) is provided as t, where 0.05 mm≤t≤9.39 mm.

3. The button battery (1) according to claim 1, **characterized in that** the protruding structure (23) comprises a first flange (231) and a second flange (232) arranged at two ends of the elastic plate part (22), respectively.

4. The button battery (1) according to claim 3, **characterized in that** a height of the first flange (231) or the second flange (232) in a thickness direction of the button battery (1) is provided as h1, where 2*t<h1<10*t; or
an included angle defined by an extension line of an outer tangent plane of the first flange (231) or the second flange (232) and by a plane where the elastic plate part (22) is located is provided as θ1, where 90°≤θ1≤150°; or
a height of the first flange (231) or the second flange (232) in a thickness direction of the button battery (1) is provided as h1, and an included angle defined by an extension line of an outer tangent plane of the first flange (231) or the second flange (232) and a plane where the elastic plate part (22) is located is provided as θ1, where 2*t<h1<10*t, and 90°≤θ1≤150°.

5. The button battery (1) according to claim 1, **characterized in that** the protruding structure (23) comprises at least two protrusions (233) arranged on the gasket part (21), and the at least two protrusions (233) are symmetrically arranged at both sides of the elastic plate part (22).

6. The button battery (1) according to claim 5, **characterized in that** a height of each of the at least two protrusions (233) along a thickness direction of the button battery (1) is provided as h2, where 1.5*t≤h2≤3*t.

7. The button battery (1) according to claim 1, **characterized in that** an orthographic projection of the gasket (20) on the positive electrode cap (11) is in the shape of a cross, of a " 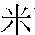 ", or of a combination shape of a circle and a cross.

8. The button battery (1) according to any one of claims 1-7, **characterized in that** the gasket (20) is provided with a positioning hole (25) configured for providing positioning when welding the gasket (20) to the positive electrode cap (11), and a concentricity between the gasket (20) and the positive electrode cap (11) is less than or equal to 0.3 mm.

9. The button battery (1) according to claim 8, **characterized in that** at least two first welding points (210) are provided between the gasket (20) and the positive electrode cap (11), and the at least two of the first welding points (210) are symmetrically arranged with respect to a center point of the gasket (20).

10. The button battery (1) according to claim 9, **characterized in that** the gasket (20) comprises:
a first region (Q1) symmetrically arranged with respect to a centerline of the gasket part (21) and a centerline of the elastic plate part (22), wherein a length of the first region (Q1) is provided as d1, where d1=0.5*L1, and a width of the first region (Q1) is equal to a width of the gasket part (21);
a second region (Q2a, Q2b) located on the gasket part (21), comprising a first part of the second region (Q2a) and a second part of the second region (Q2b), wherein the first part of the second region (Q2a) and the second part of the second region (Q2b) are located on two sides of the first region (Q1), respectively; and
a third region (Q3a, Q3b) located on the elastic plate part (22), comprising a first part of the third region (Q3a) and a second part of the third region (Q3b), wherein the first part of the third region (Q3a) and the second part of the third region (Q3a) are located on two sides of the first region (Q1), respectively;
wherein the at least two of the first welding points (210) are located in any one or a combination of two of the first region (Q1), and the first part of the second region (Q2a) and the second part of the second region (Q2b), and the at least two of the first welding points (210) are located outside the first part of the third region (Q3a) and the second part of the third region (Q3b).

11. The button battery (1) according to any one of claims 1-7, **characterized in that** the positive electrode current collector (14) comprises an annular bottom wall (141), and two ends of the gasket part (21) are connected to the annular bottom wall (141).

12. The button battery (1) according to claim 11, **characterized in that** the gasket part (21) comprises two gasket end parts (214), one of the two gasket end parts (214) comprises two gasket end points (2143), and an included angle between two connecting lines between the two gasket end points (2143) and the center point of the gasket (20) is 2*Θ2; and
wherein a diameter of a circumscribed circle corresponding to an edge of the gasket part (21) is provided as D1, a diameter of the through hole (142) of the positive electrode current collector (14) is provided as D3, a diameter of the annular bottom wall (141) of the positive electrode current collector (14) is provided as D4, a thickness of the positive electrode current collector (14) is provided as t1, and the length L1 of the gasket part (21) satisfies: L1=D1*cosθ2, and 1.02*D3*cosθ2≤L1≤0.98*(D4-2*t1)*cosθ2.

13. The button battery (1) according to claim 12, **characterized in that** the gasket part (21) comprises two gasket side edges (215) arranged oppositely, and each of the gasket end parts (214) protrudes with respect to a corresponding one of the gasket side edges (215) or is flush with the corresponding one of the gasket side edges (215).

14. The button battery (1) according to claim 12, **characterized in that** a width of the gasket part (21) is provided as w3, the elastic plate part (22) comprises two elastic plate end parts (222), one of the two elastic plate end parts (222) comprises two elastic plate end points (2223), an included angle between two connecting lines between the two elastic plate end points (2223) and the center point of the gasket (20) is 2*θ3, and the length L2 of the elastic plate part (22) satisfies: 1.5*w3≤L2≤0.98*D3*cosθ3.

15. The button battery (1) according to claim 1, **characterized in that** the gasket part (21) and the elastic plate part (22) are separately molded, and the protruding structure (23) is integrally formed with the gasket part (21) or the elastic plate part (22).

16. The button battery (1) according to claim 15, **characterized in that** the gasket part (21) comprises a gasket base body (211) and a gasket boss (212) protruding with respect to the gasket base body (211), and the gasket boss (212) and the gasket base body (211) define a gasket accommodating cavity (213) configured to accommodate a part of the elastic plate part (22); or
the elastic plate part (22) comprises an elastic plate base body (221) and an elastic plate boss (223) protruding with respect to the elastic plate base body (221), and the elastic plate boss (223) and the elastic plate base body (221) define an elastic plate accommodating cavity (224) configured to accommodate a part of the gasket part (21).

17. The button battery (1) according to claim 16, **characterized in that** a thickness of the elastic plate part (22) is provided as t1, a height of the gasket boss (212) in a thickness direction of the button battery (1) is provided as H1, and the height H1 of the gasket boss (212) is greater than or equal to the thickness t1 of the elastic plate part (22);optionally, a width of the elastic plate part (22) is provided as w1, a width of the gasket boss (212) is provided as w2, and a ratio of the width w2 of the gasket boss (212) to the width w1 of the elastic plate part (22) is (1.05-1.3): 1; or
a thickness of the gasket part (21) is provided as t2, and a height of the elastic plate boss (223) in a thickness direction of the button battery (1) is greater than or equal to the thickness t2 of the gasket part (21); optionally, a width of the gasket part (21) is provided as w3, and a ratio of a width of the elastic plate boss (223) to the width w3 of the gasket part (21) is (1.05 to 1.3): 1.

18. The button battery (1) according to claim 17, **characterized in that** any one or a combination of two of the thickness t1 of the elastic plate part (22) and the thickness t2 of the gasket part (21) ranges from 0.05 mm to 0.30 mm; or
the thickness t1 of the elastic plate part (22) is the same as the thickness t2 of the gasket part (21); or
any one or a combination of two of the thickness t1 of the elastic plate part (22) and the thickness t2 of the gasket part (21) ranges from 0.05 mm to 0.30 mm, and the thickness t1 of the elastic plate part (22) is the same as the thickness t2 of the gasket part (21).

19. The button battery (1) according to claim 17, **characterized in that** the elastic plate part (22) is welded to the gasket part (21), and an even number of second welding points (241) are provided between the elastic plate part (22) and the gasket part (21).

20. The button battery (1) according to claim 19, **characterized in that** the elastic plate part (22) is welded to the gasket part (21) in a circular welding region (Q5), a diameter of the circular welding region (Q5) is less than or equal to the width w1 of the elastic plate part (22), and the diameter of the circular welding region (Q5) is less than the width w3 of the gasket part (21).

21. The button battery (1) according to claim 17, **characterized in that** the protruding structure (23) comprises a first flange (231) and a second flange (232) arranged on the elastic plate part (22), the first flange (231) is located on one end of the elastic plate part (22), the second flange (232) is located on the other end of the elastic plate part (22), and the first flange (231) and the second flange (232) pass through the through hole (142) and are embedded into the positive plate (15), respectively.

22. The button battery (1) according to claim 21, **characterized in that** a height of the first flange (231) or the second flange (232) is provided as h1, where 2*t<h1<10*t; or
an included angle defined by an extension line of an outer tangent plane of the first flange (231) or the second flange (232) and a plane where the elastic plate part (22) is located is provided as θ1, where 90°<θ1≤150°, or
a height of the first flange (231) or the second flange (232) is provided as h1, and an included angle defined by an extension line of an outer tangent plane of the first flange (231) or the second flange (232) and a plane where the elastic plate part (22) is located is provided as θ1, where 2*t<h1<10*t, and 90°≤θ1≤150°.

23. The button battery (1) according to claim 21, **characterized in that** the protruding structure (23) further comprises the gasket boss (212) passing through the through hole (142) and embedded inside the positive plate (15).

24. The button battery (1) according to any one of claims 15-23, **characterized in that** an orthographic projection of the gasket (20) on the positive electrode cap (11) is in the shape of a cross, and an orthographic projection of each of the elastic plate part (22) and the gasket part (21) on the positive electrode cap (11) is in a straight shape.

25. The button battery (1) according to claim 16, **characterized in that** the gasket (20) is welded to the positive electrode cap (11), the gasket (20) and the elastic plate end points (2223) are respectively arranged as a centrally symmetrical structure, and a concentricity between the gasket (20) and the positive electrode cap (11) is less than or equal to 0.3 mm.

26. The button battery (1) according to claim 25, **characterized in that** at least two third welding points (242) are provided between the gasket (20) and the positive electrode cap (11), and at least two of the third welding points (242) are symmetrically arranged with respect to a center point of the gasket (20).

27. The button battery (1) according to claim 26, **characterized in that** the gasket (20) comprises:
a first region (Q1) defined by welding the gasket part (21) and the elastic plate part (22);
a second region (Q2a, Q2b) located on the gasket part (21), comprising a first part of the second region (Q2a) and a second part of the second region (Q2b) located on two opposite sides of the first region (Q1), respectively; and
a third region (Q3a, Q3b) located on the elastic plate part (22), comprising a first part of the third region (Q3a) and a second part of the third region (Q3b) located on two opposite sides of the first region (Q1), respectively;
wherein the at least two of the third welding points (242) are located in the first part of the second region (Q2a) and the second part of the second region (Q2b), and the at least two of the third welding points (242) are located outside the first part of the third region (Q3a) and the second part of the third region (Q3b).

28. The button battery (1) according to claim 27, **characterized in that** a distance between any two of the at least two third welding points (242) is defines as d1, where 0.3*L1+0.7*w1≤d1≤0.9*L1+0.1*w1.

29. The button battery (1) according to claim 15, **characterized in that** the positive electrode current collector (14) comprises an annular bottom wall (141), and two ends of the gasket part (21) are connected to the annular bottom wall (141).

30. The button battery (1) according to claim 29, **characterized in that** the gasket part (21) comprises a first gasket end part (2141) and a second gasket end part (2142), the first gasket end part (2141) comprises two gasket end parts (2143), and an included angle between two connecting lines between the two gasket end points (2143) and the center point of the gasket part (21) is 2*θ2; and
wherein a diameter of a circumscribed circle corresponding to an edge of the gasket part (21) is provided as D1, a diameter of the through hole (142) of the positive electrode current collector (14) is provided as D3, a diameter of the annular bottom wall (141) of the positive electrode current collector (14) is provided as D4, a thickness of the positive electrode current collector (14) is provided as t3, and the length L1 of the gasket part (21) satisfies: L1=D1*cosθ2, and 1.02*D3*cosθ2≤L1≤0.98*(D4-2*t3)*cosθ2.

31. The button battery (1) according to claim 30, **characterized in that** the elastic plate part (22) comprises a first elastic plate end part (2221) and a second elastic plate end part (2222), the first elastic plate end part (2221) comprises two elastic plate end points (2223), an included angle between two connecting lines between the two elastic plate end points (2223) and a center point of the elastic plate part (22) is 2*θ3, and the length L2 of the elastic plate part (22) satisfies: 1.5*w3≤L2≤0.98*D3*cosθ3.

32. A method of manufacturing a gasket (20) of the button battery (1) according to any one of claims 16-31, **characterized in that** the method comprises:
forming an elastic plate combination (300) having a plurality of elastic plate parts (22) connected in the shape of a band by a stamping process;
forming a gasket combination (400) having a plurality of gaskets parts (21) connected in the shape of a band by a stamping process; and
adjusting a center point of the elastic plate combination (300) and a center point the gasket combination (400) to be coincided, and welding the elastic plate combination (300) and the gasket combination (400) together by using a laser welding apparatus to form a gasket assembly (200) having a plurality of gaskets (20) connected with each other.

33. A method of assembling the button battery (1) according to any one of claims 1-31, **characterized in that** the method comprises:
adjusting a relative position between the gasket (20) and the positive electrode cap (11), and welding the gasket (20) and the positive electrode cap (11) together to form a positive electrode cap assembly (220);
placing the positive plate (15) into the positive electrode current collector (14) to form a positive electrode assembly (100);
placing a negative plate (16) into a negative electrode cap (12) to form a negative electrode assembly (500);
sequentially placing a separator (17) and the positive electrode assembly (100) into the negative electrode assembly (500) to form an assembly;
injecting an electrolyte (19) into the assembly; and
covering the positive electrode cap assembly (220) on an end of the assembly.
